# EUROPEAN PATENT SPECIFICATION

(11) **EP 3 306 885 B1**
(45) Date of publication and mention of the grant of the patent: **07.04.2021**
(21) Application number: 15894743.2
(22) Date of filing: 15.09.2015
(51) Int. Cl.: H04L 29/06, H04L 29/08

(54) **METHOD OF TRANSMITTING STREAMING MEDIA, METHOD OF PLAYING STREAMING MEDIA, DEVICE FOR TRANSMITTING STREAMING MEDIA AND DEVICE FOR PLAYING STREAMING MEDIA**
VERFAHREN ZUR ÜBERTRAGUNG VON STREAMING-MEDIEN, VERFAHREN ZUR WIEDERGABE VON STREAMING-MEDIEN, VORRICHTUNG ZUR ÜBERTRAGUNG VON STREAMING-MEDIEN UND VORRICHTUNG ZUR WIEDERGABE VON STREAMING-MEDIEN
PROCÉDÉ ET DISPOSITIF DE TRANSMISSION DE MÉDIA EN CONTINU ET PROCÉDÉ ET DISPOSITIF DE LECTURE DE MÉDIA EN CONTINU

(30) Priority: 08.06.2015 CN 201510310616
(43) Date of publication of application: 11.04.2018
(73) Proprietor: ZTE Corporation, Shenzhen, Guangdong 518057 (CN)
(72) Inventor: ZHANG, Chi, Shenzhen Guangdong 518057 (CN)
(74) Representative: Novagraaf Technologies
(86) International application number: PCT/CN2015/089670
(87) International publication number: WO 2016/197475

(56) References cited:
- WO-A1-2014/015512
- WO-A1-2014/026988
- US-A1- 2014 281 009
- US-A1- 2015 081 838
- US-A1- 2015 131 657

## Description

### Technical Field

The present disclosure relates to the field of communications, and more particularly to a streaming transmission method and device, and a playing method and device.

### Background

There are many streaming transmission modes based on adaptive streaming transmission over Hyper Text Transfer Protocol (HTTP). Dynamic Adaptive Streaming over HTTP (DASH) and HTTP Live Streaming (HLS) are illustrated hereinbelow as examples.

At present, both the DASH and the HLS are mainstream streaming transmission modes based on adaptive streaming over HTTP, characterized by continuously sending media segments in an HTTP manner to implement media data transmission. The HLS was proposed by Apple in 2009, and the DASH was proposed by a Moving Picture Experts Group (MPEG) in 2011. Compared with a DASH protocol emerging recently, an HLS protocol has a larger user group, particularly in Europe and America.

Streaming media data streams of an HTTP adaptive streaming transmission type are similar, for example, for DASH and HLS, each streaming media data stream contains a media description file and a series of media segment files. A Media Presentation Description (MPD) file is a media description file of DASH streaming data, used to describe streaming data features, including an acquisition manner and an effective time period of all media segment files for storing media data. An m3u8 file is a media description file of HLS streaming data, used to provide an acquisition manner of all media segment files to be played and playing time of this file.

A Multimedia Broadcast Multicast Service (MBMS) is a one-to-many service for transmitting data to multiple mobile terminals from a single source entity via a Long Term Evolution (LTE)/3G radio bearer network. Due to the characteristic of broadcast, all terminals can share the same bandwidth of an operator, and traffic is free for terminal users. This is greatly attractive to both the operator and the terminal users. In a known MBMS, there is a great development prospect in live broadcast/on-demand services by transmitting streaming media data of the HTTP adaptive streaming transmission type in an MBMS system.

The streaming data of the HTTP adaptive streaming transmission type transmitted by the MBMS may be sent from a Content Provider (CP). In a 3^{rd} Generation Partnership Project (3GPP) standard, only a process of sending data to a terminal in a DASH streaming data format by an MBMS and playing the data is provided, and other streaming formats of the HTTP adaptive streaming transmission type, such as HLS, are not supported. As for CPs already having a huge number of HLS format streaming data sources, this undoubtedly increases the conversion cost of data formats, so as to increase the popularization difficulty of the MBMS.

Any effective solution has not been proposed yet at present for a problem in which data in a non-DASH format cannot be sent to a terminal by an MBMS.

US 20140281009A1 and US 20150131657A1 provide respective technical solutions; however, the above mentioned problem still remains unsolved.

### Summary

Some embodiments of the present disclosure provide a streaming transmission method and device, and a playing method and device, which may solve a problem in which data in a non-DASH format cannot be sent to a terminal in an MBMS system.

The invention is defined by a streaming transmission method according to independent claim 1, a streaming playing method according to independent claim 5, a streaming transmission device according to independent claim 10 and a streaming playing device according to independent claim 13.

Further embodiments are defined in the dependent claims.

### Brief Description of the Drawings

The drawings illustrated herein are intended to provide a deeper understanding for the present disclosure, and form a part of the present application. The schematic embodiments and illustrations of the present disclosure are intended to explain the present disclosure, and do not form improper limits to the present invention, whose scope is only defined by the appended claims. In the drawings:
Fig. 1 is a flowchart of a first streaming transmission method according to an embodiment of the present disclosure;
Fig. 2 is a flowchart of a second streaming transmission method according to an embodiment of the present disclosure;
Fig. 3 shows a first streaming playing method according to an embodiment of the present disclosure;
Fig. 4 shows a second streaming playing method according to an embodiment of the present disclosure;
Fig. 5 illustrates a first streaming transmission device according to an embodiment of the present disclosure;
Fig. 6 is a structure block diagram of a first broadcasting module 56 in a first streaming transmission device according to an embodiment of the present disclosure;
Fig. 7 is a structure block diagram of a first conversion module 54 in a first streaming transmission device according to an embodiment of the present disclosure;
Fig. 8 is an exemplary structure block diagram 1 of a first conversion module 54 in a first streaming transmission device according to an embodiment of the present disclosure;
Fig. 9 is an exemplary structure block diagram 2 of a first conversion module 54 in a first streaming transmission device according to an embodiment of the present disclosure;
Fig. 10 is a structure block diagram of a second streaming transmission device according to an embodiment of the present disclosure;
Fig. 11 is a structure block diagram of a recording module 104 in a second streaming transmission device according to an embodiment of the present disclosure;
Fig. 12 is a structure block diagram of a first streaming playing device according to an embodiment of the present disclosure;
Fig. 13 is an exemplary structure block diagram of a first streaming playing device according to an embodiment of the present disclosure;
Fig. 14 is a structure block diagram of a third receiving module 122 in a first streaming playing device according to an embodiment of the present disclosure;
Fig. 15 is a structure block diagram of a first judging module 124 in a first streaming playing device according to an embodiment of the present disclosure;
Fig. 16 is a structure block diagram of a second judging module 126 in a first streaming playing device according to an embodiment of the present disclosure;
Fig. 17 is an exemplary structure block diagram of a first streaming playing device according to an embodiment of the present disclosure;
Fig. 18 is a structure block diagram of a second streaming playing device according to an embodiment of the present disclosure;
Fig. 19 is a structure block diagram of a fourth receiving module 182 in a second streaming playing device according to an embodiment of the present disclosure;
Fig. 20 is a structure block diagram of a third judging module 184 in a second streaming playing device according to an embodiment of the present disclosure;
Fig. 21 is an exemplary structure block diagram 1 of a second streaming playing device according to an embodiment of the present disclosure;
Fig. 22 is a structure block diagram of a fourth judging module 212 in a second streaming playing device according to an embodiment of the present disclosure;
Fig. 23 is an exemplary structure block diagram 2 of a second streaming playing device according to an embodiment of the present disclosure;
Fig. 24 is a structure block diagram of an MBMS system according to an embodiment of the present disclosure;
Fig. 25 is a playing flowchart of an MBMS system according to an embodiment of the present disclosure;
Fig. 26 is a conversion flowchart according to an embodiment of the present disclosure; and
Fig. 27 is a diagram of HLS data transmission according to an embodiment of the present disclosure.

### Detailed Description of the Embodiments

The present disclosure will be illustrated hereinbelow with reference to the drawings and in conjunction with the embodiments in detail. It may be appreciated that the embodiments in the present application and the characteristics in the embodiments may be combined mutually under the condition of no conflicts.

In some embodiments of the present disclosure, a solution is provided, which may solve a problem in which a non-DASH data source cannot be sent via an MBMS system and cannot be played in a terminal.

At present, from the perspective of a terminal, a main flow of playing streaming data of a CP on the terminal via an MBMS is as follows.

A Broadcast and Multicast Service Center (BM-SC) network element may record media description information (namely, contents of a media description file) of streaming data into an SA file in an MPD file format defined in a DASH standard, and periodically broadcast and send the SA file on a public channel via a radio network. The terminal may periodically update the SA file by receiving a broadcast signal.

Whilst the SA file is sent, the BM-SC network element may send one or more media segment files corresponding to the streaming data on each service channel via a radio broadcast.

After receiving the SA file from a public channel broadcast, the terminal may extract streaming program description information MPD and a streaming channel access mode, acquire a media segment file list and effective time of each segment via MPD, receive current effective media segment files in sequence via radio broadcasts accessing corresponding channels, and finally play the obtained effective media segment files in sequence by a DASH player.

From the description on above-mentioned process, it can be seen that the following two problems may need to be solved in order to play HTTP adaptive streaming transmission type streaming data other than DASH via an MBMS system.

The terminal may acquire media description information via the SA file, but the SA file may only support to describe media information in an MPD format defined in a DASH protocol. Therefore, the first problem is how to describe streaming data in other formats in an SA file.

The second problem is how to acquire a corresponding streaming segment file via the media description information and to play the streaming segment file after the terminal acquires the media description information in the SA file.

The solutions for solving the above-mentioned problems are illustrated hereinbelow.

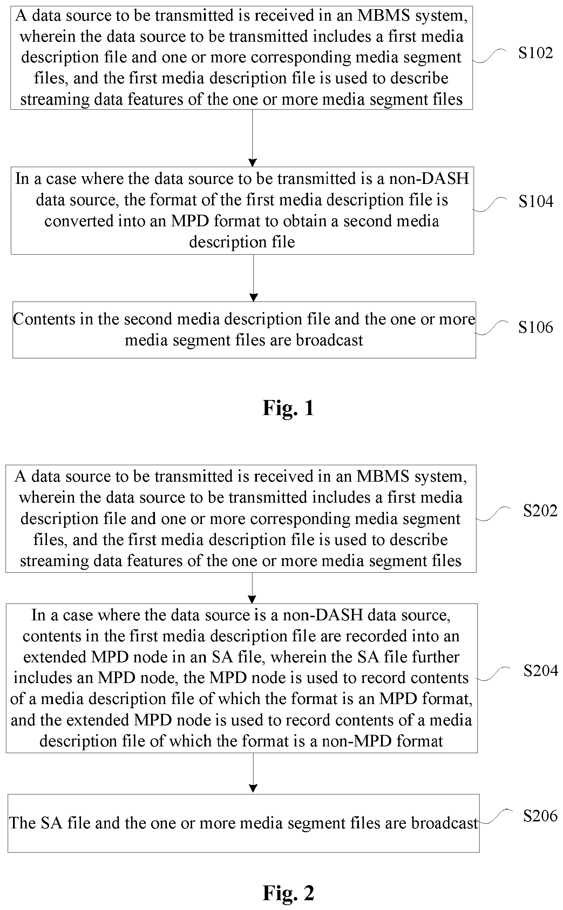

In an embodiment, a streaming transmission method is provided. Fig. 1 is a flowchart of a first streaming transmission method according to an embodiment of the present disclosure. As shown in Fig. 1, the flow may include the acts as follows.

At act S102, a data source to be transmitted may be received in an MBMS system. The data source to be transmitted may include a first media description file and one or more corresponding media segment files, and the first media description file may be used to describe streaming data features of the one or more media segment files.

At act S104, in a case where the data source to be transmitted is a non-DASH data source, the format of the first media description file may be converted into an MPD format to obtain a second media description file.

At act S106, contents in the second media description file and the one or more media segment files may be broadcast.

Herein, a BM-SC network element in the MBMS system may receive the data source to be transmitted. It may be appreciated that receiving of the data source to be transmitted via the BM-SC network element is only an exemplary embodiment. Other network elements in the MBMS system may also receive the data source to be transmitted. By means of the above-mentioned acts, when the BM-SC network element receives a non-DASH data source, the non-DASH data source may be normally broadcast. By virtue of the solution, a non-DASH data source may be broadcast in an MBMS system, thereby solving a problem in which a non-DASH data source cannot be sent to a terminal in an MBMS system.

When the contents in the second media description file and the one or more media segment files are broadcast, the contents in the second media description file may be recorded in an SA file, and the SA file and the one or more media segment files may be broadcast. An MPD node and an extended MPD node may be included in the SA file, the MPD node being used to record contents of a media description file of which the format is an MPD format. In an exemplary embodiment, the format of an MPD node of the SA file may be as follows:

```
  <MPD xmlns:xsi="http://www.w3.org/2001/XMLSchema-instance"
    xmlns="urn:mpeg:dash:schema:mpd:2011"
    xsi:schemaLocation="urn:mpeg:dash:schema:mpd:2011 MPD.xsd"
    type="dynamic"
    minimumUpdatePeriod="PT10S"
    timeShiftBufferDepth="PT30S"
    minBufferTime="PT2S"
    profiles="urn:mpeg:dash:profile:mp2t-main:2011 "
    availabilityStartTime="2015-02-03T06:34:49Z">
    <Period id="1" start="PT0S">
      <AdaptationSet mimeType="video/mp2t">
         <ContentComponent id="1" contentType="video" />
         <ContentComponent id="2" contentType="audio" />
         <Representation id="v0" scanType="progressive"/>
         <SegmentTemplate duration="2" startNumber="49216641"
         media="20150129T091809-01-$Number$.ts"/>
      </AdaptationSet>
    </Period>
  </MPD>.
```

When the contents of the second media description file are recorded in the SA file, the contents of the media description file may be copied to the above-mentioned MPD node. It may be appreciated that this is merely an example, and there may be other manners of recording contents of a media description file.

In an exemplary embodiment, the act that the contents in the second media description file are recorded into an SAfile may include be implemented in the following manner. The contents in the second media description file may be recorded into an MPD node in the SAfile. In the exemplary embodiment, the MPD node may be used to record contents of a media description file of which the format is the MPD format.

In an exemplary embodiment, the act that the format of the first media description file is converted into an MPD format to obtain a second media description file may be implemented in the following manner. Whether the format of the first media description file is an MPD format may be judged. In a case where the format of the first media description file is not the MPD format, whether the MBMS system supports a media description file in a non-MPD format may be judged. In a case where the MBMS system does not support the media description file in the non-MPD format, the format of the first media description file may be converted into the MPD format to obtain the second media description file.

In the above-mentioned embodiments, a situation where the format of the first media description file is not the MPD format and the MBMS system does not support a media description file in a non-MPD format has been described. It may be appreciated that there may be other situations. An example is a situation where the format of the first media description file is the MPD format. Another example is a situation where the format of the first media description file is not the MPD format but the MBMS system supports a media description file in a non-MPD format. The above-mentioned situations will be illustrated hereinbelow.

In another embodiment, when the format of the first media description file is the MPD format, contents in the first media description file may be recorded into an MPD node in the SA file, in the exemplary embodiment, the MPD node may be used to record contents of a media description file of which the format is the MPD format. The SA file and the one or more media segment files may be broadcast.

In another embodiment, when the format of the first media description file is a non-MPD format but the MBMS system supports the media description file in the non-MPD format, the first media description file may be recorded into other nodes such as an extended MPD node in an SA file. In the exemplary embodiment, the SA file may further include an MPD node, the MPD node may be used to record contents of a media description file of which the format is the MPD format, and the extended MPD node may be used to record contents of a media description file of which the format is the non-MPD format. The SA file and the one or more media segment files may be broadcast. It may be appreciated that the name of a node for storing the media description file in the non-MPD format in the SA file may need to be supported by the MBMS system here.

By means of the above-mentioned embodiments, a media description file in a data source in a non-DASH format may be recorded into an SA file, so that the media description file in the non-DASH format may be sent to a terminal.

The non-DASH format may include at least one of an HLS data source, an HDS data source and an MSS data source.

Fig. 2 is a flowchart of a second streaming transmission method according to an embodiment of the present disclosure. As shown in Fig. 2, the flow may include the acts as follows.

At act S202, a data source to be transmitted may be received in an MBMS system. The data source to be transmitted may include a first media description file and one or more corresponding media segment files, and the first media description file may be used to describe streaming data features of the one or more media segment files.

At act S204, in a case where the data source is a non-DASH data source, contents in the first media description file are recorded into an extended MPD node in an SA file. In the exemplary embodiment, the SA file may further include an MPD node, the MPD node may be used to record contents of a media description file of which the format is an MPD format, and the extended MPD node may be used to record contents of a media description file of which the format is a non-MPD format.

At act S206, the SA file and the one or more media segment files may be broadcast.

Herein, a BM-SC network element in the MBMS system may receive the data source to be transmitted. It may be appreciated that receiving of the data source to be transmitted via the BM-SC network element is only an exemplary embodiment. Other network elements in the MBMS system may also receive the data source to be transmitted. By means of the above-mentioned acts, when the received data source to be transmitted is a non-DASH data source, a first media description file included in the data source may be recorded into an extended MPD node of an SA file. That is to say, an extended MPD node for recording a media description file in a non-MPD format may be added into an SA file, so as to achieve broadcast of the non-DASH data source. By virtue of the solution, a non-DASH data source may be broadcast in an MBMS system, thereby solving a problem in which a non-DASH data source cannot be sent to a terminal in an MBMS system.

In an exemplary embodiment, the act that contents in the first media description file are recorded into an extended MPD node in an SA file may be implemented in the following manner. Whether the format of the first media description file is an MPD format may be judged. In a case where the format of the first media description file is a non-MPD format, whether the MBMS system supports a media description file in the non-MPD format may be judged. In a case where the MBMS system supports the media description file in the non-MPD format, contents in the first media description file may be recorded into an extended MPD node in an SA file.

In an exemplary embodiment, the non-DASH data source may include at least one of an HLS data source, an HDS data source and an MSS data source.

It can be thus seen that the SA file is correspondingly changed for the first problem. Two changing methods may be adopted. The first method is to expand the format of an SA file supported by a conventional BM-SC network element. For example, a node parallel with an MPD node may be added into the SA file, namely an extended MPD node such as <extMPD>, for storing a media description file in a non-DASH data source. The whole MBMS system may need to support the added node, that is, the BM-SC network element may support to perform SA in accordance with the added node, and meanwhile, the terminal may support to receive service data in accordance with the added node. The second method is to add a format conversion module to the BM-SC network element. Specifically, the format conversion module may convert a media description file in a non-DASH data source to an MPD format, so as to achieve provision of a media description file in an SA. By means of the above-mentioned two methods, media description file contents corresponding to media may be provided in the SA finally, so that the terminal may receive the media description file contents via a radio broadcast under a public channel.

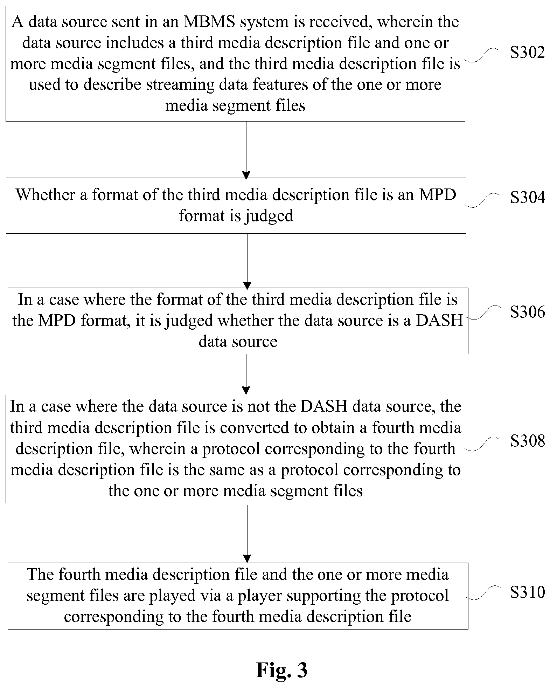

Fig. 3 shows a first streaming playing method according to an embodiment of the present disclosure. As shown in Fig. 3, the method may include the acts as follows.

At act S302, a data source sent in an MBMS system may be received. The data source may include a third media description file and one or more media segment files, and the third media description file may be used to describe streaming data features of the one or more media segment files.

At act S304, whether a format of the third media description file is an MPD format is judged.

At act S306, in a case where the format of the third media description file is the MPD format, it is judged whether the data source is a DASH data source.

At act S308, in a case where the data source is not the DASH data source, the third media description file may be converted to obtain a fourth media description file. A protocol corresponding to the fourth media description file may be the same as a protocol corresponding to the one or more media segment files.

At act S310, the fourth media description file and the one or more media segment files may be played via a player supporting the protocol corresponding to the fourth media description file.

Herein, a terminal may receive the data source, and one or more media segment files may be played in the terminal. When a first media description file is not ever converted in a BM-SC network element, the third media description file is equivalent to the foregoing first media description file. When the first media description file is ever converted in the BM-SC network element, the third media description file is equivalent to the foregoing second media description file. By means of the above-mentioned acts, after a media description file and one or more media segment files are received, whether the format of the media description file is an MPD format may be judged. In a case where the third media description file is in the MPD format whilst the data source is a non-DASH data source, it may represent that the media description file has been converted, so that the third media description file may be converted to obtain a fourth media description file. The fourth media description file and the one or more media segment files may be played via a player supporting a protocol corresponding to the fourth media description file. Thus, a non-DASH data source broadcast by the BM-SC network element may be received and broadcast, thereby solving a problem in which a non-DASH data source cannot be sent to a terminal in an MBMS system and cannot be played.

In an exemplary embodiment, after whether a format of the third media description file is an MPD format is judged, the method may further include the following act. In a case where the format of the third media description file is not the MPD format, the third media description file and the one or more media segment files may be played via a player supporting a protocol corresponding to the third media description file.

In an exemplary embodiment, the act of receiving a third media description file included in a data source sent in an MBMS system may be implemented in the following manner. An SA file periodically broadcast and issued by a network element in the MBMS system may be received, and the third media description file recorded in the SAfile may be acquired.

In an exemplary embodiment, the act that whether a format of the third media description file is an MPD format is judged may be implemented in the following manner. A recording position of the third media description file in the SA file may be judged. When the third media description file is recorded in an MPD node of the SA file, it may be determined that the format of the third media description file is an MPD format. Herein, the MPD node may be used to record contents of a media description file of which the format is the MPD format. When the third media description file is recorded in an extended MPD node of the SA file, it may be determined that the format of the third media description file is a non-MPD format. Herein, the extended MPD node may be used to record contents of a media description file of which the format is the non-MPD format.

In an exemplary embodiment, the act that whether the data source is a DASH data source is judged may include be implemented in the following manner. Whether formats corresponding to the one or more media segment files are contained in formats of media segments defined in a DASH protocol may be judged. In a case where the formats corresponding to the one or more media segment files are contained in the formats of the media segments defined in the DASH protocol, it may be determined that the data source is a DASH data source. In a case where the formats corresponding to the one or more media segment files are not contained in the formats of the media segments defined in the DASH protocol, it may be determined that the data source is not the DASH data source.

The situation described in the above-mentioned embodiments is a situation where the format of the third media description file is the MPD format and the data source is a non-DASH data source. It may be appreciated that there may be other situations. An example is a situation where the format of the third media description file is not the MPD format. Another example is a situation where the format of the third media description file is the MPD format and the data source is the DASH data source. The above-mentioned situations will be illustrated hereinbelow.

In an exemplary embodiment, after whether the data source is a DASH data source is judged, the method may further include the following act. In a case where the data source is the DASH data source, the third media description file and the one or more media segment files may be played by using a DASH player.

In an exemplary embodiment, the non-DASH data source may include at least one of an HLS data source, an HDS data source and an MSS data source.

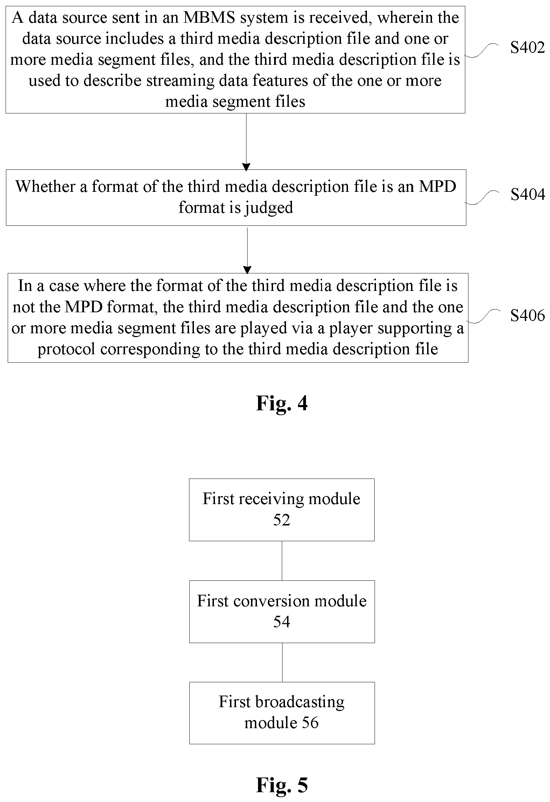

Fig. 4 shows a second streaming playing method according to an embodiment of the present disclosure. As shown in Fig. 4, the method may include the acts as follows.

At act S402, a data source sent in an MBMS system may be received. The data source may include a third media description file and one or more media segment files, and the third media description file may be used to describe streaming data features of the one or more media segment files.

At act S404, whether a format of the third media description file is an MPD format may be judged.

At act S406, in a case where the format of the third media description file is not the MPD format, the third media description file and the one or more media segment files may be played via a player supporting a protocol corresponding to the third media description file.

Herein, a terminal may receive the data source, and one or more media segment files may be played in the terminal. When a first media description file is not ever converted in a BM-SC network element, the third media description file is equivalent to the foregoing first media description file. When the first media description file is ever converted in the BM-SC network element, the third media description file is equivalent to the foregoing second media description file. By means of the above-mentioned acts, after a data source is received, whether the format of a media description file in this data source is an MPD format may be judged. In a case where the third media description file is not in the MPD format, it may represent that the media description file has been never converted, so that the third media description file and the one or more media segment files may be played via a player supporting a protocol corresponding to the third media description file. Thus, a non-DASH data source broadcast by the BM-SC network element may be received and broadcast, thereby solving a problem in which a non-DASH data source cannot be sent to a terminal in an MBMS system and cannot be played.

In an exemplary embodiment, the act of receiving a third media description file included in a data source sent in an MBMS system may be implemented in the following manner. An SA file periodically broadcast and issued by a network element in the MBMS system may be received, and the third media description file recorded in the SAfile may be acquired.

In an exemplary embodiment, the act that whether a format of the third media description file is an MPD format is judged may be implemented in the following manner. A recording position of the third media description file in the SA file may be judged. When the third media description file is recorded in an MPD node of the SA file, it may be determined that the format of the third media description file is an MPD format. Herein, the MPD node may be used to record contents of a media description file of which the format is the MPD format. When the third media description file is recorded in an extended MPD node of the SA file, it may be determined that the format of the third media description file is a non-MPD format. Herein, the extended MPD node may be used to record contents of a media description file of which the format is the non-MPD format.

In an exemplary embodiment, after whether a format of the third media description file is an MPD format is judged, the method may further include the following act. In a case where the format of the third media description file is the MPD format, whether the data source is a DASH data source may be judged. In a case where the data source is the DASH data source, the third media description file and the one or more media segment files may be played by using a DASH player.

In an exemplary embodiment, the act that whether the data source is a DASH data source is judged may be implemented in the following manner. Whether formats corresponding to the one or more media segment files are contained in formats of media segments defined in a DASH protocol may be judged. In a case where the formats corresponding to the one or more media segment files are contained in the formats of the media segments defined in the DASH protocol, it may be determined that the data source is a DASH data source. In a case where the formats corresponding to the one or more media segment files are not contained in the formats of the media segments defined in the DASH protocol, it may be determined that the data source is not the DASH data source.

In an exemplary embodiment, after whether the data source is a DASH data source is judged, the method may further include the following acts. In a case where the data source is not the DASH data source, the third media description file may be converted to obtain a fourth media description file. In the exemplary embodiment, a protocol corresponding to the fourth media description file may be the same as a protocol corresponding to the one or more media segment files. The fourth media description file and the one or more media segment files may be played via a player supporting the protocol corresponding to the fourth media description file.

In an exemplary embodiment, a non-DASH data source may include at least one of an HLS data source, an HDS data source and an MSS data source.

By means of each of the above-mentioned embodiments, the solution in the embodiments of the present disclosure for the second problem is as follows. A format conversion module may be installed on a terminal. For example, the module may be installed in mobile phone middleware or a mobile phone application. The module may convert functions of a corresponding media description file between streaming data of various HTTP adaptive streaming transmission types, so that consistency between protocols corresponding to a media description file and one or more media segment files may be achieved, and the files may be played finally via a player supporting the protocol corresponding to the media description file. After receiving an SA file, the terminal may obtain a mode of receiving contents of the media description file and the one or more media segment files from the SA file, so as to achieve reception of the one or more media segment files. However, during playing, since the player decides to a protocol corresponding to data to be played based on the media description file and the protocols corresponding to the media description file and the one or more media segment files are required to be consistent, it may be needed to convert the format of the media description file. Implementation flows may be different for different formats of data sources received by the terminal. In an embodiment, when contents of a media description file in an MPD format are received and a data source is a DASH data source, the file may be played via a DASH player. In an embodiment, when contents of a media description file in an MPD format are received and a data source is a non-DASH data source, the content format of the media description file may be converted into a media description format of a protocol corresponding to a media segment format via a format converter, and one or more media segment files may be played by using a player supporting the protocol corresponding to the converted media description file. In an embodiment, contents of a media description file in other formats (that is, non-MPD format) may be received. In this case, it may represent that a media description file is transmitted via an extended MPD node at a BM-SC network element, the format of the media description file may not be converted since protocols corresponding to the media description file and one or more media segment files are consistent, and the one or more media segment files may be played by directly using a player supporting the protocol corresponding to the media description file.

By means of the description of the above-mentioned implementation manner, a person skilled in the art may clearly know that the method according to the above-mentioned embodiments may be implemented by means of software and a necessary general hardware platform, or may be implemented by hardware. However, under many circumstances, the former may be a preferred implementation manner. Based on such understanding, the technical solutions of the present disclosure may be substantially embodied in a form of software product or parts contributing to the related technology may be embodied in a form of software product. A computer software product may be stored in a storage medium (such as a Read-Only Memory/Random Access Memory (ROM/RAM), a magnetic disk or an optical disk), which may include a plurality of instructions enabling terminal equipment (which may be a mobile phone, a computer, a server or network equipment) to execute the method according to each embodiment of the present disclosure.

In the present embodiment, a streaming transmission device is also provided. The device may be used to implement the above-mentioned embodiments and exemplary implementation manner. Those which have been illustrated will not be elaborated herein. Just as a term 'module' used below, the combination of software and/or hardware with predetermined functions may be implemented. Although the device described by the following embodiment may be better implemented by software, the implementation of hardware or the combination of software and hardware may be possible and conceived.

Fig. 5 illustrates a first streaming transmission device according to an embodiment of the present disclosure. As shown in Fig. 5, the device may include a first receiving module 52, a first conversion module 54 and a first broadcasting module 56. The device will be illustrated hereinbelow.

The first receiving module 52 may be configured to receive, in an MBMS system, a data source to be transmitted. The data source to be transmitted may include a first media description file and one or more corresponding media segment files, and the first media description file may be used to describe streaming data features of the one or more media segment files. The first conversion module 54 may be connected to the first receiving module 52, and configured to convert, in a case where the data source to be transmitted is a non-DASH data source, a format of the first media description file into an MPD format to obtain a second media description file. The first broadcasting module 56 may be connected to the first conversion module 54, and configured to broadcast contents in the second media description file and the one or more media segment files.

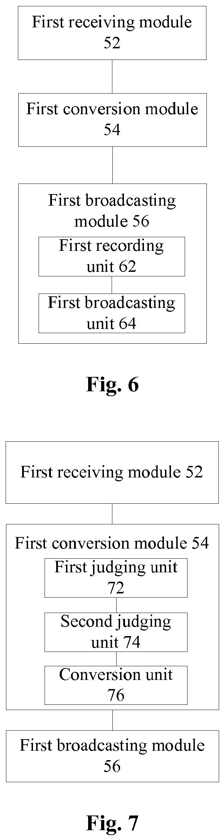

Fig. 6 is a structure block diagram of a first broadcasting module 56 in a first streaming transmission device according to an embodiment of the present disclosure. As shown in Fig. 6, the first broadcasting module 56 may include a first recording unit 62 and a first broadcasting unit 64. The first broadcasting module 56 will be illustrated hereinbelow.

The first recording unit 62 may be configured to record the contents in the second media description file into an SA file. The first broadcasting unit 64 may be connected to the first recording unit 62, and configured to broadcast the SA file and the one or more media segment files.

In an exemplary embodiment, the first recording unit 62 may be configured to record the contents in the second media description file into an MPD node in the SA file. In the exemplary embodiment, the MPD node may be used to record contents of a media description file of which the format is the MPD format.

Fig. 7 is a structure block diagram of a first conversion module 54 in a first streaming transmission device according to an embodiment of the present disclosure. As shown in Fig. 7, the first conversion module 54 may include a first judging unit 72, a second judging unit 74 and a conversion unit 76. The first conversion module 54 will be illustrated hereinbelow.

The first judging unit 72 may be configured to judge whether the format of the first media description file is an MPD format. The second judging unit 74 may be connected to the first judging unit 72, and configured to judge, in a case where the format of the first media description file is not the MPD format, whether the MBMS system supports a media description file in a non-MPD format. The conversion unit 76 may be connected to the second judging unit 74, and configured to convert, in a case where the MBMS system does not support the media description file in the non-MPD format, the format of the first media description file into the MPD format to obtain the second media description file.

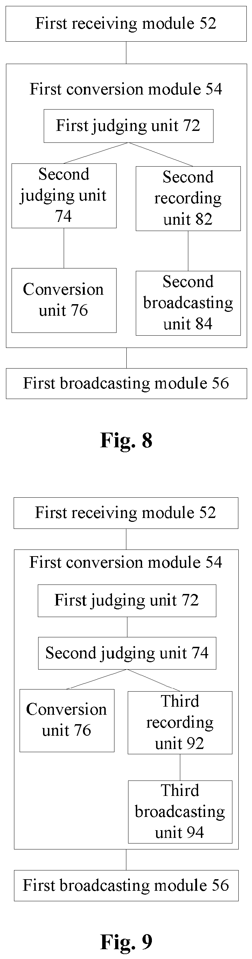

Fig. 8 is an exemplary structure block diagram 1 of a first conversion module 54 in a first streaming transmission device according to an embodiment of the present disclosure. As shown in Fig. 8, the device may include, in addition to all units as shown in Fig. 7, a second recording unit 82 and a second broadcasting unit 84. The first conversion module 54 will be illustrated hereinbelow.

The second recording unit 82 may be connected to the first judging unit 72, and configured to record, in a case where the format of the first media description file is the MPD format, contents in the first media description file into an MPD node in the SA file. In the exemplary embodiment, the MPD node may be used to record contents of a media description file of which the format is the MPD format. The second broadcasting unit 84 may be connected to the second recording unit 82, and configured to broadcast the SA file and the one or more media segment files.

Fig. 9 is an exemplary structure block diagram 2 of a first conversion module 54 in a first streaming transmission device according to an embodiment of the present disclosure. As shown in Fig. 9, the device may include, in addition to all units as shown in Fig. 7, a third recording unit 92 and a third broadcasting unit 94. The first conversion module 54 will be illustrated hereinbelow.

The third recording unit 92 may be connected to the second judging unit 74, and configured to record, in a case where the MBMS system supports the media description file in the non-MPD format, contents in the first media description file into an extended MPD node in an SA file. In the exemplary embodiment, the SA file may further include an MPD node, the MPD node may be used to record contents of a media description file of which the format is the MPD format, and the extended MPD node may be used to record contents of a media description file of which the format is the non-MPD format. The third broadcasting unit 94 may be connected to the third recording unit 92, and configured to broadcast the SA file and the one or more media segment files.

In an exemplary embodiment, the non-DASH data source may include at least one of an HLS data source, an HDS data source and an MSS data source.

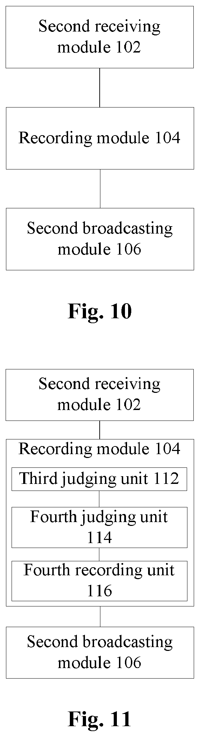

Fig. 10 is a structure block diagram of a second streaming transmission device according to an embodiment of the present disclosure. As shown in Fig. 10, the device may include a second receiving module 102, a recording module 104 and a second broadcasting module 106. The device will be illustrated hereinbelow.

The second receiving module 102 may be configured to receive, in an MBMS system, a data source to be transmitted. The data source to be transmitted may include a first media description file and one or more corresponding media segment files, and the first media description file may be used to describe streaming data features of the one or more media segment files. The recording module 104 may be connected to the second receiving module 102, and configured to record, in a case where the data source is a non-DASH data source, contents in the first media description file into an extended MPD node in an SA file. In the exemplary embodiment, the SA file may further include an MPD node, the MPD node may be used to record contents of a media description file of which the format is an MPD format, and the extended MPD node may be used to record contents of a media description file of which the format is a non-MPD format. The second broadcasting module 106 may be connected to the recording module 104, and configured to broadcast the SA file and the one or more media segment files.

Fig. 11 is a structure block diagram of a recording module 104 in a second streaming transmission device according to an embodiment of the present disclosure. As shown in Fig. 11, the recording module 104 may include a third judging unit 112, a fourth judging unit 114 and a fourth recording unit 116. The recording module 104 will be illustrated hereinbelow.

The third judging unit 112 may be configured to judge whether the format of the first media description file is an MPD format. The fourth judging unit 114 may be connected to the third judging unit 112, and configured to judge, in a case where the format of the first media description file is a non-MPD format, whether the MBMS system supports a media description file in the non-MPD format. The fourth recording unit 116 may be connected to the fourth judging unit 114, and configured to record, in a case where the MBMS system supports the media description file in the non-MPD format, contents in the first media description file into an extended MPD node in an SA file.

In an exemplary embodiment, the non-DASH data source may include at least one of an HLS data source, an HDS data source and an MSS data source.

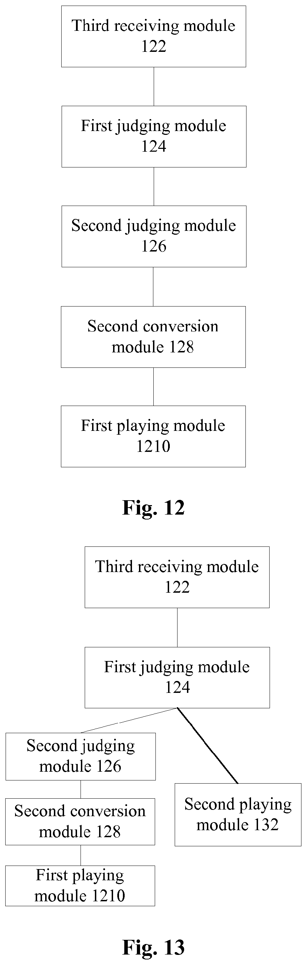

Fig. 12 is a structure block diagram of a first streaming playing device according to an embodiment of the present disclosure. As shown in Fig. 12, the device may include a third receiving module 122, a first judging module 124, a second judging module 126, a second conversion module 128 and a first playing module 1210. The device will be illustrated hereinbelow.

The third receiving module 122 may be configured to receive a data source sent in an MBMS system. The data source may include a third media description file and one or more media segment files, and the third media description file may be used to describe streaming data features of the one or more media segment files. The first judging module 124 may be connected to the third receiving module 122, and configured to judge whether a format of the third media description file is an MPD format. The second judging module 126 may be connected to the first judging module 124, and configured to judge, in a case where the format of the third media description file is the MPD format, whether the data source is a DASH data source. The second conversion module 128 may be connected to the second judging module 126, and configured to convert, in a case where the data source is not the DASH data source, the third media description file to obtain a fourth media description file, wherein a protocol corresponding to the fourth media description file is the same as a protocol corresponding to the one or more media segment files. The first playing module 1210 may be connected to the second conversion module 128, and configured to play the fourth media description file and the one or more media segment files via a player supporting the protocol corresponding to the fourth media description file.

Fig. 13 is an exemplary structure block diagram of a first streaming playing device according to an embodiment of the present disclosure. As shown in Fig. 13, the device may include, in addition to all modules as shown in Fig. 12, a second playing module 132. The device will be illustrated hereinbelow.

The second playing module 132 may be connected to the first judging module 124, and configured to play, in a case where the format of the third media description file is not the MPD format, the third media description file and the one or more media segment files via a player supporting a protocol corresponding to the third media description file.

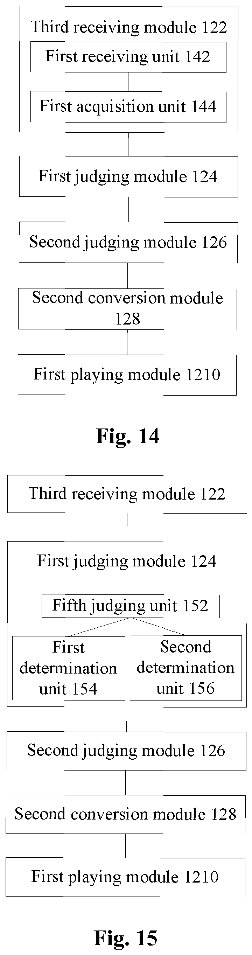

Fig. 14 is a structure block diagram of a third receiving module 122 in a first streaming playing device according to an embodiment of the present disclosure. As shown in Fig. 14, when receiving a third media description file included in a data source sent in an MBMS system, the third receiving module 122 may include a first receiving 142 and a first acquisition unit 144. The third receiving module 122 will be illustrated hereinbelow.

The first receiving unit 142 may be configured to receive an SA file periodically broadcast and issued by a network element in the MBMS system. The first acquisition unit 144 may be connected to the first receiving unit 142, and configured to acquire the third media description file recorded in the SA file.

Fig. 15 is a structure block diagram of a first judging module 124 in a first streaming playing device according to an embodiment of the present disclosure. As shown in Fig. 15, the first judging module 124 may include a fifth judging unit 152, a first determination unit 154 and a second determination unit 156. The first judging module 124 will be illustrated hereinbelow.

The fifth judging unit 152 may be configured to judge a recording position of the third media description file in the SA file. The first determination unit 154 may be connected to the fifth judging unit 152, and configured to determine, when the third media description file is recorded in an MPD node of the SA file, that the format of the third media description file is an MPD format. In the exemplary embodiment, the MPD node may be used to record contents of a media description file of which the format is the MPD format. The second determination unit 156 may be connected to the fifth judging unit 152, and configured to determine, when the third media description file is recorded in an extended MPD node of the SA file, that the format of the third media description file is a non-MPD format. The extended MPD node may be used to record contents of a media description file of which the format is the non-MPD format.

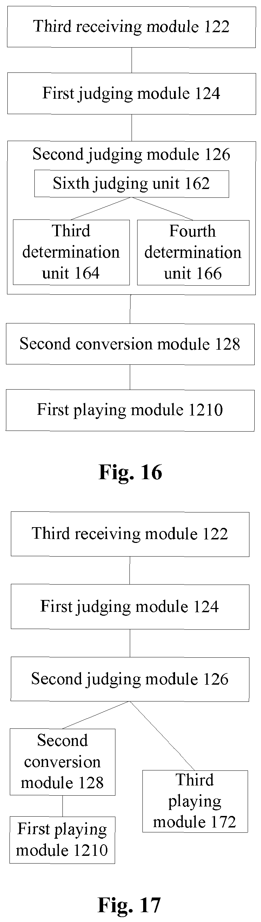

Fig. 16 is a structure block diagram of a second judging module 126 in a first streaming playing device according to an embodiment of the present disclosure. As shown in Fig. 16, the second judging module 126 may include a sixth judging unit 162, a third determination unit 164 and a fourth determination unit 166. The second judging module 126 will be illustrated hereinbelow.

The sixth judging unit 162 may be configured to judge whether formats corresponding to the one or more media segment files are contained in formats of media segments defined in a DASH protocol. The third determination unit 164 may be connected to the sixth judging unit 162, and configured to determine, in a case where the formats corresponding to the one or more media segment files are contained in the formats of the media segments defined in the DASH protocol, that the data source is a DASH data source. The fourth determination unit 166 may be connected to the sixth judging unit 162, and configured to determine, in a case where the formats corresponding to the one or more media segment files are not contained in the formats of the media segments defined in the DASH protocol, that the data source is not the DASH data source.

Fig. 17 is an exemplary structure block diagram of a first streaming playing device according to an embodiment of the present disclosure. As shown in Fig. 17, the device may include, in addition to all modules as shown in Fig. 12, a third playing module 172. The device will be illustrated hereinbelow.

The third playing module 172 may be connected to the second judging module 126, and configured to play, in a case where the data source is the DASH data source, the third media description file and the one or more media segment files by using a DASH player.

In an exemplary embodiment, the non-DASH data source may include at least one of an HLS data source, an HDS data source and an MSS data source.

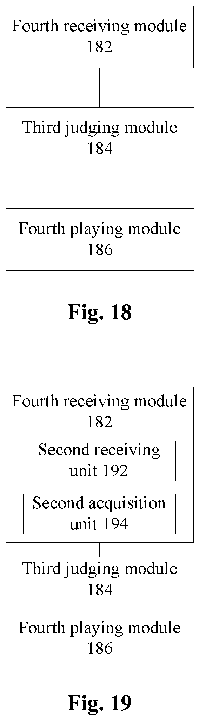

Fig. 18 is a structure block diagram of a second streaming playing device according to an embodiment of the present disclosure. As shown in Fig. 18, the device may include a fourth receiving module 182, a third judging module 184 and a fourth playing module 186. The device will be illustrated hereinbelow.

The fourth receiving module 182 may be configured to receive a data source sent in an MBMS system. The data source may include a third media description file and one or more media segment files, and the third media description file may be used to describe streaming data features of the one or more media segment files. The third judging module 184 may be connected to the fourth receiving module 182, and configured to judge whether a format of the third media description file is an MPD format. The fourth playing module 186 may be connected to the third judging module 184, and configured to play, in a case where the format of the third media description file is not the MPD format, the third media description file and the one or more media segment files via a player supporting a protocol corresponding to the third media description file.

Fig. 19 is a structure block diagram of a fourth receiving module 182 in a second streaming playing device according to an embodiment of the present disclosure. As shown in Fig. 19, when receiving a third media description file included in a data source sent in an MBMS system, the fourth receiving module 182 may include a second receiving unit 192 and a second acquisition unit 194. The fourth receiving module 182 will be illustrated hereinbelow.

The second receiving unit 192 may be configured to receive an SA file periodically broadcast and issued by a network element in the MBMS system. The second acquisition unit 194 may be connected to the second receiving unit 192, and configured to acquire the third media description file recorded in the SA file.

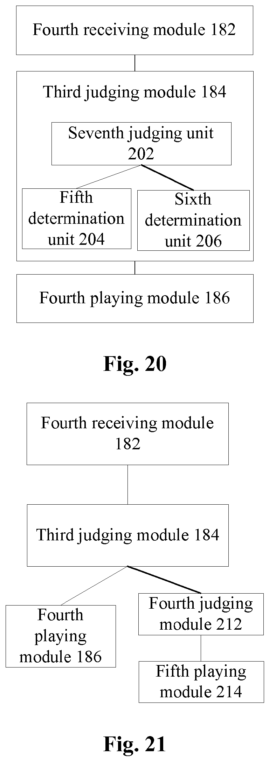

Fig. 20 is a structure block diagram of a third judging module 184 in a second streaming playing device according to an embodiment of the present disclosure. As shown in Fig. 20, the third judging module 184 may include a seventh judging unit 202, a fifth determination unit 204 and a sixth determination unit 206. The third judging module 184 will be illustrated hereinbelow.

The seventh judging unit 202 may be configured to judge a recording position of the third media description file in the SA file. The fifth determination unit 204 may be connected to the seventh judging unit 202, and configured to determine, when the third media description file is recorded in an MPD node of the SA file, that the format of the third media description file is an MPD format. In the exemplary embodiment, the MPD node may be used to record contents of a media description file of which the format is the MPD format. The sixth determination unit 206 may be connected to the seventh judging unit 202, and configured to determine, when the third media description file is recorded in an extended MPD node of the SA file, that the format of the third media description file is a non-MPD format. In the exemplary embodiment, the extended MPD node may be used to record contents of a media description file of which the format is the non-MPD format.

Fig. 21 is an exemplary structure block diagram 1 of a second streaming playing device according to an embodiment of the present disclosure. As shown in Fig. 21, the device may include, in addition to all modules as shown in Fig. 18, a fourth judging module 212 and a fifth playing module 214. The device will be illustrated hereinbelow.

The fourth judging module 212 may be connected to the third judging module 184, and configured to judge, in a case where the format of the third media description file is the MPD format, whether the data source is a DASH data source. The fifth playing module 214 may be connected to the fourth judging module 212, and configured to play, in a case where the data source is the DASH data source, the third media description file and the one or more media segment files by using a DASH player.

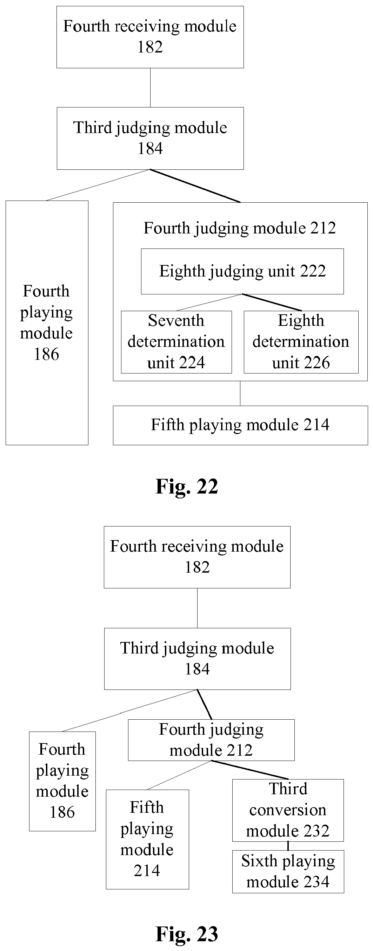

Fig. 22 is a structure block diagram of a fourth judging module 212 in a second streaming playing device according to an embodiment of the present disclosure. As shown in Fig. 22, the fourth judging module 212 may include an eighth judging unit 222, a seventh determination unit 224 and an eighth determination unit 226. The fourth judging module 212 will be illustrated hereinbelow.

The eighth judging unit 222 may be configured to judge whether formats corresponding to the one or more media segment files are contained in formats of media segments defined in a DASH protocol. The seventh determination unit 224 may be connected to the eighth judging unit 222, and configured to determine, in a case where the formats corresponding to the one or more media segment files are contained in the formats of the media segments defined in the DASH protocol, that the data source is a DASH data source. The eighth determination unit 226 may be connected to the eighth judging unit 222, and configured to determine, in a case where the formats corresponding to the one or more media segment files are not contained in the formats of the media segments defined in the DASH protocol, that the data source is not the DASH data source.

Fig. 23 is an exemplary structure block diagram 2 of a second streaming playing device according to an embodiment of the present disclosure. As shown in Fig. 23, the device may include, in addition to all modules as shown in Fig. 21, a third conversion module 232 and a sixth playing module 234. The device will be illustrated hereinbelow.

The third conversion module 232 may be connected to the fourth judging module 212, and configured to convert, in a case where the data source is not the DASH data source, the third media description file to obtain a fourth media description file, wherein a protocol corresponding to the fourth media description file is the same as a protocol corresponding to the one or more media segment files. The sixth playing module 234 may be connected to the third conversion module 232, and configured to play the fourth media description file and the one or more media segment files via a player supporting the protocol corresponding to the fourth media description file.

In an exemplary embodiment, a non-DASH data source may include at least one of an HLS data source, an HDS data source and an MSS data source.

The present disclosure will be illustrated hereinbelow in conjunction with specific embodiments.

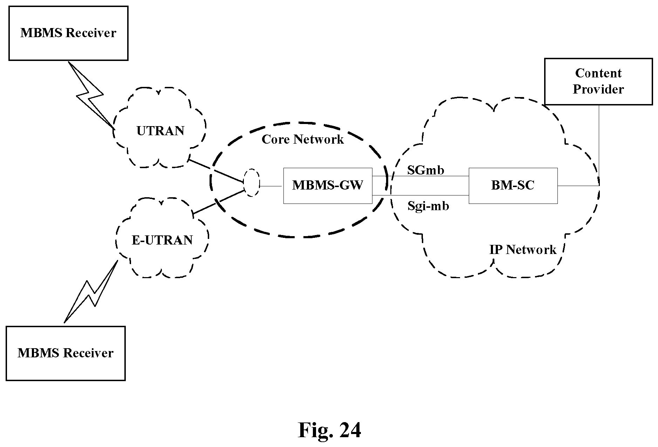

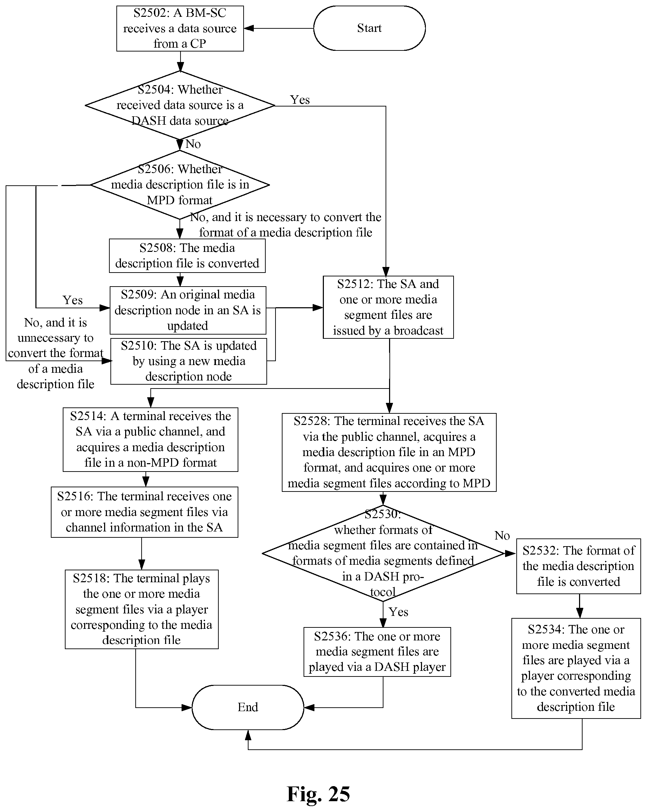

Fig. 24 is a structure block diagram of an MBMS system according to an embodiment of the present disclosure. Fig. 25 is a playing flowchart of an MBMS system according to an embodiment of the present disclosure. The playing flow will be illustrated hereinbelow in conjunction with Fig. 24 and Fig. 25. In each embodiment introduced hereinbelow, a service flow of an MBMS may be as shown in Fig. 25. A specific operation of each act is described as follows.

At act S2502, a CP may send a streaming data source of the HTTP adaptive streaming transmission type (the same as the above-mentioned data source to be transmitted) to a BM-SC. The streaming data source of the HTTP adaptive streaming transmission type may include a media description file (the same as the above-mentioned first media description file) and one or more corresponding media segment files. Since media contents consist of successive media segment files in the streaming data source of the HTTP adaptive streaming transmission type, data may be sent in an HTTP, HTTPS or FTP manner.

At act S2504, after receiving the data source transmitted by the CP, the BM-SC may judge a data type of the data source. In a case where the data type of the data source is a DASH data source type, that is, the media description file is in an MPD format, act S2512 may be directly executed, and a normal data sending flow may be executed. In a case where the data type of the data source is a non-DASH data source type, that is, the media description file is in a non-MPD format, act S2506 may be executed.

In the present embodiment, the data type of the data source may be judged in the following manner. Whether formats corresponding to the one or more media segment files in the received data source are contained in formats of media segments defined in a DASH protocol may be judged. The non-DASH data source may include at least one of an HLS data source, an HDS data source and an MSS data source. In a case where the formats of the one or more media segment files are contained in the formats of the media segments defined in the DASH protocol, it may be determined that the data type of the data source is a DASH data source type; and otherwise, it may be determined that the data type of the data source is a non-DASH data source type.

At act S2506, the format of a media description file included in the streaming data source of the HTTP adaptive streaming transmission type may be an MPD format or a non-MPD format. Whether the format of the media description file included in the streaming data source of the HTTP adaptive streaming transmission type is the MPD format may be judged. In a case where the format of the media description file is the non-MPD format, whether it is needed to convert the format of the media description file may be judged. The judgment standard may be as follows. In a case where an MBMS system supports the media description file in the non-MPD format, the format may not be converted, and otherwise, the format may be converted. In a case where it is needed to record contents of the media description file by using the MPD format at present, it may be needed to execute act S2508 to convert the format of the media description file. In a case where a judgment result is that it is not needed to convert the format of the media description file, it may be needed to record contents of the media description file by using the non-MPD format, act S2510 may be directly executed, and SA update may be performed by recording the contents of the media description file in an extended MPD node. In a case where the format of the media description file is the MPD format, it may be not needed to convert the format of the media description file, act S2509 may be executed, and the contents of the media description file may be directly updated into a corresponding MPD node in an SA file.

At act S2508, the format of the media description file may be converted into the MPD format via a format conversion module, act S2509 may be executed, and contents of the converted media description file (which may be referred to as a second media description file) may be recorded into a corresponding MPD node in an SA file.

At act S2509, the contents of the media description file may be recorded into the corresponding MPD node in the SA file.

At act S2510, an <extMPD> node (the same as the above-mentioned extended MPD node) may be added into the SA file. The <extMPD> node may be used to store contents of a media description file in a non-MPD format.

At act S2512, in accordance with the playing flow in related technologies, the BM-SC may periodically send the SA file to a terminal via a radio broadcast of a public channel, and may send one or more corresponding media segment files on each channel via the radio broadcast. It may be appreciated that in a case where a current media description is not made via the MPD format of the DASH protocol, the BM-SC may need to provide a function of sending one or more media segment files in accordance with the current media description.

In the present embodiment, during sending of the SAfile, the SAfile may be sent on the basis of the playing flow existing in related technologies. That is, the SA file may be periodically sent to the terminal via the radio broadcast of the public channel. However, this sending manner of the SA file is merely an example, and the adopted sending manner is not limited in the present embodiment. The present embodiment may also send the SA file in other manners.

By virtue of the above-mentioned acts, the process of broadcasting, by a BM-SC, a data source transmitted by a CP may be completed. How to play, after a terminal receives a data source broadcast by the BM-SC, one or more media segment files included in the data source will be illustrated hereinbelow in conjunction with two embodiments.

### First embodiment

From the above-mentioned embodiments, it can be seen that when a data source received by a BM-SC network element is a non-DASH data source, the format of a media description file included in the data source may be an MPD format or may be a non-MPD format. This embodiment mainly illustrates the situation where the format of a media description file is a non-MPD format.

At act S2514, after receiving an SA file sent by the BM-SC network element from a public channel broadcast, the terminal may parse contents (the same as the contents of the above-mentioned third media description file) of a media description file corresponding to a program needing to be played in the terminal from the received SA file, and may also acquire a channel access mode corresponding to the program needing to be played.

At act S2516, the terminal may access a channel by means of the channel access mode acquired at act S2514, and receive the media description file corresponding to the program needing to be played.

At act S2518, the format of a received media segment file is a non-MPD format, which may represent that the BM-SC did not convert the format of the media description file. In this case, protocols corresponding to the media description file and the media segment file are consistent. The terminal may judge the corresponding protocol via the format of the received media description file, and select a player supporting this protocol to play the file.

### Second embodiment

This embodiment mainly illustrates the situation where the format of a media description file is an MPD format.

At act S2528, the terminal may receive an SA file sent by the BM-SC network element from the public channel broadcast, and receive a media segment file via channel information corresponding to the contents of the third media description file recorded in this SA file (act S2528 is the same as act S2514 and act S2516).

At act S2530, the terminal may judge whether the format of the media segment file is contained in formats of media segments defined in a DASH protocol. In a case where a judgment result is that the format of the media segment file is not contained in the formats of the media segments defined in the DASH protocol, act S2532 may be executed, and otherwise, act S2536 may be executed.

At act S2532, after it is determined that the format of the media segment file is not contained in the formats of the media segments defined in the DASH protocol, since the format of the media description file is the MPD format, which may represent that protocols corresponding to the media description file and the media segment file are inconsistent, the format of the media description file may be converted, so that protocols corresponding to the converted media description file and the media segment file are consistent.

At act S2534, after the format of the media description file is converted, the media segment file may be played by using the converted media description file via a player supporting the protocol corresponding to the media description file.

At act S2536, a media segment file of which the format is compatible with a DASH media segment format may be directly played by using the media description file via a DASH player.

In an embodiment, the MBMS system may convert, in accordance with the method provided in the embodiments of the present disclosure, a streaming data source of the HTTP adaptive streaming transmission type (the data source including a media allocation file and a media description file) such as HLS in which formats of one or more media segment files are compatible with DASH in the BM-SC network element. The MBMS system may convert contents of a media description file contained in the data source to a DASH media description file (MPD) format, record the contents into an SA file (or may record the contents into an MPD node of the SA file), periodically issue the SA file, and broadcast and issue one or more media segment files to the terminal via a radio network. The terminal may acquire contents of a media description file recorded in the SA file by receiving the SA file, receive one or more media segment files issued by a radio broadcast via channel information corresponding to the contents of the media description file, and then play the file via a DASH player. In accordance with the flow as shown in Fig. 25, the sequence of the acts may be: act S2502, act S2504, act S2506, act S2508, act S2509, act S2512, act S2528, act S2530, and act S2536.

In an embodiment, the MBMS system may parse, in accordance with the method provided in the embodiments of the present disclosure, a media description file of a DASH data source (the data source including a media allocation file and a media description file) such as HLS at the BM-SC network element, determine that contents of the media description file are in a non-MPD format, add the contents of the media description file into an SAfile in an extended element form (one or more extended MPD nodes may be added into the SA file, and the contents of the media description file in the non-MPD format may be recorded by utilizing the extended MPD node), periodically issue the SA file, and broadcast and issue one or more media segment files to the terminal via a radio network. The terminal may acquire contents of a media description file, such as m3u8 of HLS, recorded in the SA file by receiving the SA file, receive one or more media segment files issued by a radio broadcast via channel information corresponding to the contents of the media description file recorded in the SA file, and then play the media description file and the one or more media segment files via a player supporting a protocol corresponding to the media description file in the terminal. In accordance with the flow as shown in Fig. 25, the sequence of the acts may be: act S2502, act S2504, act S2506, act S2510, act S2512, act S2514, act S2516, and act S2518.

In an embodiment, the MBMS system may convert, in accordance with the method provided in the embodiments of the present disclosure, a non-DASH data source (the data source including a media allocation file and a media description file) at the BM-SC network element, convert contents of a media description file to an MPD format, record the contents into an SA file (or may be recorded into an MPD node of the SA file), periodically issue the SA file, and broadcast and issue one or more media segment files to the terminal via a radio network. The terminal may acquire contents of a media description file recorded in the SA file by receiving the SA file, receive one or more media segment files issued by a radio broadcast via channel information corresponding to the contents of the media description file, convert the contents of the media description file from an MPD format to a format of the contents of the media description file before conversion via a format conversion module arranged in the terminal, and then play the file via a player supporting a protocol corresponding to the media description file. It may be appreciated that since a media segment format is not compatible with DASH in this embodiment, the file may not be played on the terminal via a DASH player. After the file is transmitted in a DASH form via the MBMS system, the contents of the media description file may converted, via the format conversion module, into a format before conversion by the BM-SC network element in the terminal, and then played via a player corresponding to this format. In accordance with the flow as shown in Fig. 25, the sequence of the acts may be: act S2502, act S2504, act S2506, act S2508, act S2509, act S2512, act S2528, act S2530, act S2532, and act S2534.

In an embodiment, the MBMS system may parse, in accordance with the method provided in the embodiments of the present disclosure, a media description file of a non-DASH data source (the data source including a media allocation file and a media description file) at the BM-SC network element, add the contents of the media description file into an SAfile in an extended element form (one or more extended MPD nodes may be added into the SA file, and the contents of the media description file in the non-MPD format are recorded by utilizing the extended MPD node), periodically issue the SA file, and broadcast and issue one or more media segment files to the terminal via a radio network. The terminal may acquire contents of a media description file recorded in the SA file by receiving the SA file, receive one or more media segment files issued by a radio broadcast via channel information corresponding to the contents of the media description file recorded in the SA file, and then play the file via a player corresponding to the media. In accordance with the flow as shown in Fig. 25, the sequence of the acts may be: act S2502, act S2504, act S2506, act S2510, act S2512, act S2514, act S2516, and act S2518.

It may be appreciated that since specific manners of implementing, by different manufacturers, middleware between the BM-SC network element and the terminal in the MBMS system are different, node formats in the SA file may be differently required. In this case, according to specific requirements of different manufacturers, when the format of a media description file is converted at the BM-SC network element, needed information (this information may be redundant information) may be carried according to the requirements of the manufacturers so as to meet format requirements for manufacturer products, and then the redundant information may be removed via a conversion module during playing at the terminal. This situation will be illustrated with an embodiment hereinbelow.

In an embodiment, middleware between a terminal and a BM-SC requires that initialized segment file information about media initialization should be contained in an MPD for describing media information in an SA. In this case, a data source to be transmitted is an HLS-format data source, media segments are self-initialized files in accordance with an HLS standard, that is, an independent initialized segment file does not exist. In a case where the BM-SC does not support a media description file in a non-MPD format, a media description file m3u8 corresponding to the HLS may be converted into an MPD file at the BM-SC. During conversion, the MPD may specify invalid initialized segment file information. After conversion, the MPD information may be written into the SA, and the SA and the media segments corresponding to the HLS may be periodically broadcast. After the terminal receives the SA, since the MPD contains initialized information, the MPD may pass a middleware format inspection of a manufacturer. The MPD information may be transferred to a conversion module, and the conversion module may delete redundant initialized segment information in the MPD. After the redundant information is deleted, the media description file is consistent with information described before conversion of the BM-SC, and may be played via a DASH player.

As for format conversion of a media description file in each embodiment, since the media description file has similar functions of describing a media segment file list, a conversion principle may be to ensure semantic consistency of the file before and after conversion, namely consistency of the described media segment file. However, it may be appreciated that media description files of different data sources may be continuously changed. In order to ensure consistency of the continuously-changed media description files before and after conversion, the following two manners may be adopted. The first manner is to generate, on the basis of each change of a media description file to be converted, a corresponding converted media description file, so as to form a situation where the media description files before and after being converted are always in one-to-one correspondence. The second manner is to judge whether media segment sets described by a media description file before and after being changed are consistent (segment naming rules are consistent), if so, it may be not needed to generate a corresponding converted media description file for the changed media description file to be converted. In a case where the media segment sets described by the media description file before and after being changed are changed, it may be needed to re-generate a converted media description file for the changed media description file. An embodiment is adopted for illustration hereinbelow.

In an embodiment, when a media description file m3u8 of HLS is converted into a media description file MPD of DASH, media segment sequences to be played within a period from current time to later time may be provided in the m3u8 file in a file list manner. The m3u8 file may continuously change the media segment sequences as time goes by. When the file is converted into an MPD format, in an alternative manner, media segment sequences listed in m3u8 may be described via sub-elements SegmentList in the MPD. Since the SegmentList elements enumerate all media segment files in a listing manner, the MPD may need to be changed accordingly along with the change of file sequences in the m3u8 file, so as to update the file sequences in SegmentList. In another alternative manner, media segment sequences listed in m3u8 may be described via sub-elements SegmentTemplate in the MPD. Since the SegmentTemplate elements describe a set of media segment files in a naming rule manner, along with the change of the media segment file sequences described in the m3u8 file, in a case where media segment files described by the m3u8 file before and after being updated satisfy a naming rule described by the SegmentTemplate elements, that is, media segment sets described by the m3u8 file before and after being updated are identical, it may be not needed to update the MPD file. Otherwise, it may be needed to update the naming rule described by the SegmentTemplate elements in the MPD file, and the naming rule should satisfy the media segment file sequences described in the updated m3u8.

The conversion process will be illustrated hereinbelow with a method for converting an HLS media description file to a DASH media description file. It may be appreciated that the conversion process provided hereinafter is merely one of alternative manners. Other conversion manners only need to ensure that described media segment file sequences are consistent.

In a case where media segment names provided in an m3u8 file of HLS streaming data are irregular, all segments listed in the m3u8 may be renamed as names with successive serial numbers, and the final segment name format may be specified to be: "prefix_serial number.suffix". Herein, serial number parts will be gradually increased in a sequence of segments. In a case where it is not needed to rename, the following acts are directly executed.

The type attribute of an MPD element in a target MPD file may be set as dynamic for an HLS data source in a live scenario, and the type attribute of the MPD element in the target MPD file may be set as static for an HLS data source in an on-demand scenario.

In a case where the playing duration of each media segment in the HLS data source is identical, the profile attribute of the MPD element in the target MPD file may be set as urn:mpeg:dash:profile: mp2t-main:2011, and otherwise, the profile attribute may be set as urn:mpeg:dash:profile:full:2011, so as to support TS-format media segments.

The availabilityStartTime attribute of the MPD element in the target MPD file may be set as the playing time of a first media segment file in the HLS data source.

All Representation elements under an AdaptationSet element in the target MPD file may be set as an audio/video-in-one state, because TS-format media segment files are audio/video-in-one.

In a case where the playing duration of all media segments in the HLS data source is identical, a segment file naming rule in the m3u8 may be described in the target MPD via a SegmentTemplate element. The duration attribute of the element is the playing duration of a segment, and the startNumber attribute of the element is the start number of a first segment. In a case where the playing duration of all media segments in the HLS data source is different, a segment name list in the m3u8 may be described in the target MPD via a SegmentList element, and the playing time of each segment may be described via sub-elements SegmentTimeline.

Streaming segment files corresponding to HLS streaming data may be continuously renamed, so as to ensure that media segment file names are consistent with those described in the MPD until the program is ended.

In order to make the above conversion manner clearer, specific conversion will be illustrated with an embodiment hereinbelow. In the embodiment, an HLS source data m3u8 file to be converted is:
#EXTM3U
#EXT-X-VERSION:2
#EXT-X-TARGETDURATION:2
#EXT-X-MEDIA-SEQUENCE:49216641
#EXTINF:2, no desc
#EXT-X-PROGRAM-DATE-TIME:2015-02-03T06:34:49Z 20150129T091809-01-49216641.ts
#EXTINF:2, no desc
#EXT-X-PROGRAM-DATE-TIME:2015-02-03T06:34:51Z 20150129T091809-01-49216642.ts
#EXTINF:2, no desc
#EXT-X-PROGRAM-DATE-TIME:2015-02-03T06:34:53Z 20150129T091809-01-49216643.ts
#EXTINF:2, no desc
#EXT-X-PROGRAM-DATE-TIME:2015-02-03T06:34:55Z 20150129T091809-01-49216644.ts
#EXTINF:2, no desc
#EXT-X-PROGRAM-DATE-TIME:2015-02-03T06:34:57Z 20150129T091809-01-49216645.ts
#EXTINF:2, no desc
#EXT-X-PROGRAM-DATE-TIME:2015-02-03T06:34:59Z 20150129T091809-01-49216646.ts
#EXTINF:2, no desc
#EXT-X-PROGRAM-DATE-TIME:2015-02-03T06:35:01 Z 20150129T091809-01-49216647.ts
#EXTINF:2, no desc
#EXT-X-PROGRAM-DATE-TIME:2015-02-03T06:35:03Z 20150129T091809-01-49216648.ts
#EXTINF:2, no desc
#EXT-X-PROGRAM-DATE-TIME:2015-02-03T06:35:05Z 20150129T091809-01-49216649.ts
#EXTINF:2, no desc
#EXT-X-PROGRAM-DATE-TIME:2015-02-03T06:35:07Z 20150129T091809-01-49216650.ts
#EXTINF:2, no desc
#EXT-X-PROGRAM-DATE-TIME:2015-02-03T06:35:09Z 20150129T091809-01-49216651.ts
#EXTINF:2, no desc
#EXT-X-PROGRAM-DATE-TIME:2015-02-03T06:35:11Z 20150129T091809-01-49216652.ts
#EXTINF:2, no desc
#EXT-X-PROGRAM-DATE-TIME:2015-02-03T06:35:13Z 20150129T091809-01-49216653.ts
#EXTINF:2, no desc
#EXT-X-PROGRAM-DATE-TIME:2015-02-03T06:35:15Z 20150129T091809-01-49216654.ts
#EXTINF:2, no desc
#EXT-X-PROGRAM-DATE-TIME:2015-02-03T06:35:17Z 20150129T091809-01-49216655.ts

The above-mentioned file is a program of which each media segment has an equal playing duration. Adefinition corresponding to each field is as shown hereinafter, and a converted media description file MPD corresponding to DASH streaming data is:

```
  <?xml version="1.0" encoding="UTF-8" standalone="no"?>
  <MPD xmlns:xsi="http://www.w3.org/2001/XMLSchema-instance"
    xmlns="urn:mpeg:dash:schema:mpd:2011"
    xsi:schemaLocation="urn:mpeg:dash:schema:mpd:2011 MPD.xsd"
    type="dynamic"
    minimumUpdatePeriod="PT10S"
    timeShiftBufferDepth="PT30S"
    minBufferTime="PT2S"
    profiles="urn:mpeg:dash:profile:mp2t-main:2011"
    availabilityStartTime="2015-02-03T06:34:49Z">
    <Period id="1" start="PT0S">
      <AdaptationSet mimeType="video/mp2t">
         <ContentComponent id="1" contentType="video" />
         <ContentComponent id="2" contentType="audio" />
         <Representation id="v0" scanType="progressive"/>
         <SegmentTemplate duration="2" startNumber="49216641"
         media="20150129T091809-01-$Number$.ts"/>
      </AdaptationSet>
    </Period>
  </MPD>.
```

Some fields in the above-mentioned file are illustrated as follows.
#EXTM3U:
m3u8 file standard, representative of extended m3u8
#EXT-X-VERSION:2
m3u8 protocol version
#EXT-X-TARGETDURATION:2
Maximum media segment playing duration
#EXT-X-MEDIA-SEQUENCE:49216641
Playing start sequence number
#EXTINF:2,no desc
Playing duration of first media segment
#EXT-X-PROGRAM-DATE-TIME:2015-02-03T06:34:49Z
Playing start time of first media segment
20150129T091809-01-49216641.ts
File name of first media segment
#EXTINF:2,no desc
Playing duration of second media segment
#EXT-X-PROGRAM-DATE-TIME:2015-02-03T06:34:51 Z
Playing start time of second media segment
20150129T091809-01-49216642.ts
File name of second media segment

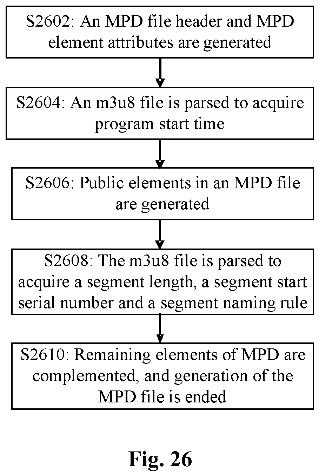

Fig. 26 is a conversion flowchart according to an embodiment of the present disclosure. As shown in Fig. 26, in accordance with a conversion rule introduced in the embodiments of the present disclosure, specific conversion acts are as follows.

At act S2602, a public node MPD in a target MPD file and a public attribute of the public node MPD may be generated.

At act S2604, the playing start time of a first media segment file in an m3u8 file may be parsed so as to obtain 2015-02-03T06:34:49Z. The time may be set as an MPD element attribute availabilityStartTime in the target MPD file, for representing program start time.

At act S2606, elements Period, AdaptationSet, ContentComponent and Representation in the target MPD file may be generated. There may be only one Period element, only one AdaptationSet element, only one Representation element, and two ContentComponent elements, one representing a video and the other one representing an audio.

At act S2608, the playing duration 2, start segment serial number 49216641 and segment naming rule of each media segment file in the m3u8 file may be parsed to generate that the duration attribute of a SegmentTemplate element in the target MPD file is each segment length 2 in m3u8, the startNumber attribute is a serial number 49216641 corresponding to a first media segment, and the media attribute is a segment naming rule with successive serial number segment names "20150129T091809-01-$Number$.ts".

At act S2610, an ending flag of each element in the MPD may be complemented. MPD generation is completed.

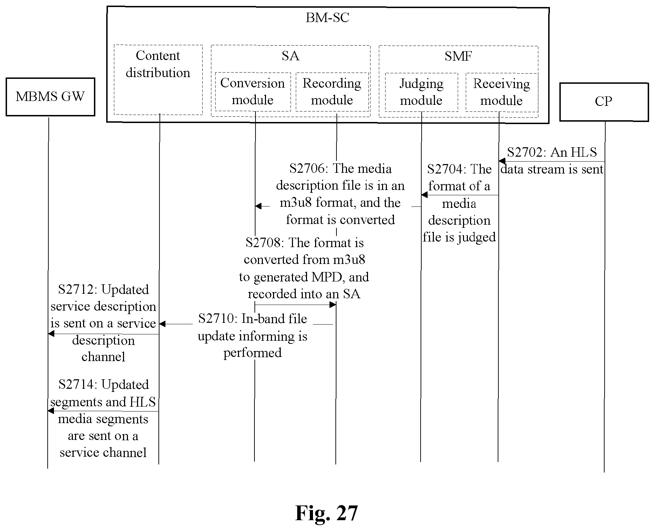

How to use the solution in the embodiments of the present disclosure in an MBMS system is illustrated hereinbelow with an embodiment in conjunction with the streaming transmission method and device provided in the present disclosure. Fig. 27 is a diagram of HLS data transmission according to an embodiment of the present disclosure. How to send a non-DASH data stream in an MBMS system is illustrated in conjunction with Fig. 27. As shown in Fig. 27, the flow of sending HLS streaming data via the MBMS system is as follows.

At act S2702, when a program starts to be played, a CP may send an HLS format data stream including HLS media segments and continuously-updated media description files m3u8 to an SMF module of a BM-SC network element.

At act S2704, the SMF module may receive data from the CP via an internal receiving module, and inform a judgment module in the SMF of data source format judgment. The judgment module in the SMF may judge via a media description file format.

At act S2706, in a case where a media description file is an m3u8 file, a conversion module in an SA module may be informed to perform format conversion of the media description file. In a case where the media description file is an MPD file, a recording module in the SA module may be directly informed to record the MPD into a service description file.

At act S2708, the conversion module in the SA module may convert the m3u8 file of HLS to an MPD format meeting requirements of the MBMS system. Media segment file sequences described by the converted MPD may be consistent with media segment files in an HLS data source. After conversion is completed, the recording module in the SA module may be informed to record the converted MPD into the service description file, herein, the MPD may be used to describe media description corresponding to an HLS channel.

At act S2710, after the recording module in the SA module records the converted MPD into the service description file, a service description file update flow may be triggered to generate in-band updated segments for describing the change of the MPD in an SA file, and meanwhile, a message may be sent to a content distribution module to inform the content distribution module to send in-band updated segment files.

At act S2712, the content distribution module may periodically and repeatedly send the updated service description file to an MBMS gateway via a service description channel, and the service description file may be sent to a radio network via the gateway.

At act S2714, the content distribution module may periodically send the updated segment files to the MBMS gateway within corresponding service channels, and the updated segment files may be sent to the radio network via the gateway. That is an in-band update manner usually mentioned.

It may be appreciated that each of the above-mentioned modules may be implemented by software or hardware. For the latter, each module may be implemented by using, but not limited to, the following manners. The modules may be located in the same processor or the modules may be located in multiple processors respectively.

The embodiments of the present disclosure also provide a storage medium. In the present embodiment, the storage medium may be configured to store a program code for executing the following acts.

At act S1, a data source to be transmitted may be received in an MBMS system. The data source to be transmitted may include a first media description file and one or more corresponding media segment files, and the first media description file is used to describe streaming data features of the one or more media segment files.

At act S2, in a case where the data source to be transmitted is a non-DASH data source, a format of the first media description file may be converted into an MPD format to obtain a second media description file.

At act S3, contents in the second media description file and the one or more media segment files may be broadcast.

In an exemplary embodiment, the storage medium may be configured to store a program code for executing the following acts.

At act S1, a data source to be transmitted may be received in an MBMS system. The data source to be transmitted may include a first media description file and one or more corresponding media segment files, and the first media description file is used to describe streaming data features of the one or more media segment files.

At act S2, in a case where the data source is a non-DASH data source, contents in the first media description file may be recorded into an extended MPD node in an SAfile. In the exemplary embodiment, the SA file may further include an MPD node, the MPD node may be used to record contents of a media description file of which the format is the MPD format, and the extended MPD node may be used to record contents of a media description file of which the format is the non-MPD format.

At act S3, the SA file and the one or more media segment files may be broadcast.

In the present embodiment, the storage medium may include, but not limited to, various media capable of storing program codes such as a U disk, an ROM, an RAM, a mobile hard disk, a magnetic disk or an optical disk.

Specific examples in the present embodiment may refer to examples described in the above-mentioned embodiments and alternative implementation manners, and will not be elaborated herein in the present embodiment.

Obviously, a person skilled in the art shall understand that all of the above-mentioned modules or acts in the present disclosure may be implemented by using a general calculation device. The modules or acts may be centralized on a single calculation device or may be distributed on a network composed of multiple calculation devices. In an exemplary embodiment, they may be implemented by using executable program codes of the calculation devices. Thus, they may be stored in a storage device and executed by the calculation devices. The shown or described acts may be executed in a sequence different from this sequence under certain conditions. The modules or acts may be manufactured into each integrated circuit module respectively, or multiple modules or acts therein may be manufactured into a single integrated circuit module. Thus, the present disclosure is not limited to a combination of any specific hardware and software.

The above is only the exemplary embodiments of the present disclosure, and not intended to limit the present disclosure. As will occur to a person skilled in the art, the present disclosure is susceptible to various modifications and changes, as long as these modifications and changes all within the scope of protection which is only defined by the appended claims of the present disclosure.

### Industrial Applicability

As above, a streaming transmission method and device, and a playing method and device, provided in the embodiments of the present disclosure, have the beneficial effects as follows. A problem in which a non-DASH data source cannot be sent to a terminal in an MBMS system may be solved, thereby achieving the effect of improving the generalization of an MBMS.

## Claims

1. A streaming transmission method, comprising:
receiving, by a network element in a Multimedia Broadcast Multicast Service, MBMS, system from a content provider, a data source to be transmitted, wherein the data source to be transmitted comprises a first media description file and one or more corresponding media segment files, and the first media description file is used to describe streaming data features of the one or more media segment files (S102);
in a case where the data source to be transmitted is a non-Dynamic Adaptive Streaming over Hyper Text Transfer Protocol, non-DASH, data source, converting, by the network element in the MBMS system, a format of the first media description file into a DASH Media Presentation Description, MPD, format to obtain a second media description file (S104); and
broadcasting, by the network element in the MBMS system, contents in the second media description file and the one or more media segment files (S106).

2. The method as claimed in claim 1, wherein converting, by the network element in the MBMS system, a format of the first media description file into an MPD format to obtain a second media description file (S104) comprises:
judging whether the format of the first media description file is an MPD format;
in a case where the format of the first media description file is not the MPD format, judging whether the MBMS system supports a media description file in a non-MPD format; and
in a case where the MBMS system does not support the media description file in the non-MPD format, converting the format of the first media description file into the MPD format to obtain the second media description file.

3. The method as claimed in claim 2, wherein after judging whether the MBMS system supports a media description file in a non-MPD format, the method further comprises:
in a case where the MBMS system supports the media description file in the non-MPD format, recording contents in the first media description file into an extended MPD node in a Service Announcement SA, file, wherein the SA file further comprises an MPD node, the MPD node is used to record contents of a media description file of which the format is the MPD format, and the extended MPD node is used to record contents of a media description file of which the format is the non-MPD format; and
broadcasting the SA file and the one or more media segment files.

4. The method as claimed in any one of claims 1 to 3, wherein the non-DASH data source comprises at least one of: an Hyper Text Transfer Protocol, HTTP, Live Streaming, HLS, data source, an HTTP Dynamic Streaming, HDS, data source and a Microsoft Smooth Streaming, MSS, data source.

5. A streaming playing method, comprising:
receiving, by a terminal, a data source sent from a network element in a Multimedia Broadcast Multicast Service, MBMS, system, wherein the data source comprises a third media description file and one or more media segment files, and the third media description file is used to describe streaming data features of the one or more media segment files (S302);
judging, by the terminal, whether a format of the third media description file is a Dynamic Adaptive Streaming over Hyper Text Transfer Protocol, DASH, Media Presentation Description, MPD, format (S304);
in a case where the format of the third media description file is the MPD format, judging, by the terminal, whether the data source is a DASH data source (S306);
in a case where the data source is not the DASH data source, converting, by the terminal, the third media description file to obtain a fourth media description file, wherein a protocol corresponding to the fourth media description file is the same as a protocol corresponding to the one or more media segment files (S308); and
playing, by the terminal, the fourth media description file and the one or more media segment files via a player supporting the protocol corresponding to the fourth media description file (S310).

6. The method as claimed in claim 5, wherein after judging, by the terminal, whether a format of the third media description file is an MPD format (S304), the method further comprises:
in a case where the format of the third media description file is not the MPD format, playing the third media description file and the one or more media segment files via a player supporting a protocol corresponding to the third media description file.

7. The method as claimed in claim 5, wherein judging, by the terminal, whether a format of the third media description file is an MPD format (S304) comprises:
judging a recording position of the third media description file in an Service Announcement, SA, file;
when the third media description file is recorded in an MPD node of the SA file, determining that the format of the third media description file is the MPD format, wherein the MPD node is used to record contents of a media description file of which the format is the MPD format; and
when the third media description file is recorded in an extended MPD node of the SA file, determining that the format of the third media description file is a non-MPD format, wherein the extended MPD node is used to record contents of a media description file of which the format is the non-MPD format.

8. The method as claimed in claim 5, wherein judging, by the terminal, whether the data source is a DASH data source (S306) comprises:
judging whether formats corresponding to the one or more media segment files are contained in formats of media segments defined in a DASH protocol;
in a case where the formats corresponding to the one or more media segment files are contained in the formats of the media segments defined in the DASH protocol, determining that the data source is a DASH data source; and
in a case where the formats corresponding to the one or more media segment files are not contained in the formats of the media segments defined in the DASH protocol, determining that the data source is not the DASH data source.

9. The method as claimed in any one of claims 5 to 8, wherein a non-DASH data source comprises at least one of: an HTTP Live Streaming, HLS, data source, an HTTP Dynamic Streaming, HDS, data source and a Microsoft Smooth Streaming, MSS, data source.

10. A streaming transmission device, applied to a network element in a Multimedia Broadcast Multicast Service, MBMS, system, the streaming transmission device comprising:
a first receiving module (52), configured to receive, in a Multimedia Broadcast Multicast Service, MBMS, system from a content provider, a data source to be transmitted, wherein the data source to be transmitted comprises a first media description file and one or more corresponding media segment files, and the first media description file is used to describe streaming data features of the one or more media segment files;
a first conversion module (54), configured to convert, in a case where the data source to be transmitted is a non-Dynamic Adaptive Streaming over Hyper Text Transfer Protocol, non-DASH, data source, a format of the first media description file into a DASH
Media Presentation Description, MPD, format to obtain a second media description file; and
a first broadcasting module (56), configured to broadcast contents in the second media description file and the one or more media segment files.

11. The device as claimed in claim 10, wherein the first conversion module (54) comprises:
a first judging unit (72), configured to judge whether the format of the first media description file is an MPD format;
a second judging unit (74), configured to judge, in a case where the format of the first media description file is not the MPD format, whether the MBMS system supports a media description file in a non-MPD format; and
a conversion unit (76), configured to convert, in a case where the MBMS system does not support the media description file in the non-MPD format, the format of the first media description file into the MPD format to obtain the second media description file.

12. The device as claimed in claim 11, further comprising:
a third recording unit (92), configured to record, in a case where the MBMS system supports the media description file in the non-MPD format, contents in the first media description file into an extended MPD node in an Service Announcement, SA, file, wherein the SA file further comprises an MPD node, the MPD node is used to record contents of a media description file of which the format is the MPD format, and the extended MPD node is used to record contents of a media description file of which the format is the non-MPD format; and
a third broadcasting unit (94), configured to broadcast the SAfile and the one or more media segment files.

13. A streaming playing device, applied to a terminal, the streaming playing device comprising:
a third receiving module (122), configured to receive a data source sent from a network element in a Multimedia Broadcast Multicast Service, MBMS, system, wherein the data source comprises a third media description file and one or more media segment files, and the third media description file is used to describe streaming data features of the one or more media segment files;
a first judging module (124), configured to judge whether a format of the third media description file is a Dynamic Adaptive Streaming over Hyper Text Transfer Protocol, DASH, Media Presentation Description, MPD, format;
a second judging module (126), configured to judge, in a case where the format of the third media description file is the MPD format, whether the data source is a DASH data source;
a second conversion module (128), configured to convert, in a case where the data source is not the DASH data source, the third media description file to obtain a fourth media description file, wherein a protocol corresponding to the fourth media description file is the same as a protocol corresponding to the one or more media segment files; and
a first playing module (1210), configured to play the fourth media description file and the one or more media segment files via a player supporting the protocol corresponding to the fourth media description file.

14. The device as claimed in claim 13, further comprising:
a second playing module (132), configured to play, in a case where the format of the third media description file is not the MPD format, the third media description file and the one or more media segment files via a player supporting a protocol corresponding to the third media description file.

15. The device as claimed in claim 13, wherein the first judging module (124) comprises:
a fifth judging unit (152), configured to judge a recording position of the third media description file in an Service Announcement, SA, file;
a first determination unit (154), configured to determine, when the third media description file is recorded in an MPD node of the SA file, that the format of the third media description file is the MPD format, wherein the MPD node is used to record contents of a media description file of which the format is the MPD format; and
a second determination unit (156), configured to determine, when the third media description file is recorded in an extended MPD node of the SA file, that the format of the third media description file is a non-MPD format, wherein the extended MPD node is used to record contents of a media description file of which the format is the non-MPD format.

## Patentansprüche

1. Verfahren zur Streaming-Übertragung, umfassend:
Empfangen, durch ein Netzwerkelement, in einem Multimedia Broadcast Multicast Service-, MBMS-System, von einem Inhalte-Anbieter, einer zu übertragenden Datenquelle, wobei die zu übertragende Datenquelle eine erste Medienbeschreibungsdatei und eine oder mehrere entsprechende Mediensegmentdateien umfasst, und die erste Medienbeschreibungsdatei verwendet wird, um Streaming-Datenmerkmale der einen oder mehrerer Mediensegmentdateien (S102) zu beschreiben;
in einem Fall, in dem die zu übertragende Datenquelle eine Non Dynamic Adaptive Streaming over Hyper Text Transfer Protokoll, Nicht-DASH-Datenquelle ist, Umwandeln, durch das Netzwerkelement in dem MBMS-System, eines Formats der ersten Medienbeschreibungsdatei in ein DASH Media Presentation Description, MPD-Format, um eine zweite Medienbeschreibungsdatei (S104) zu erhalten; und
Ausstrahlen, durch das Netzwerkelement in dem MBMS-System, von Inhalten in der zweiten Medienbeschreibungsdatei und der einen oder mehreren Mediensegmentdateien (S106).

2. Verfahren nach Anspruch 1, wobei das Umwandeln, durch das Netzwerkelement in dem MBMS-System, eines Formats der ersten Medienbeschreibungsdatei in ein MPD-Format, um eine zweite Medienbeschreibungsdatei (S104) zu erhalten, umfasst:
Beurteilen, ob das Format der ersten Medienbeschreibungsdatei ein MPD-Format ist;
in einem Fall, in dem das Format der ersten Medienbeschreibungsdatei nicht das MPD-Format ist, Beurteilen, ob das MBMS-System eine Medienbeschreibungsdatei in einem Nicht-MPD-Format unterstützt; und
in einem Fall, in dem das MBMS-System die Medienbeschreibungsdatei in dem Nicht-MPD-Format nicht unterstützt, Umwandeln des Formats der ersten Medienbeschreibungsdatei in das MPD-Format, um die zweite Medienbeschreibungsdatei zu erhalten.

3. Verfahren nach Anspruch 2, wobei das Verfahren nach dem Beurteilen, ob das MBMS-System eine Medienbeschreibungsdatei in einem Nicht-MPD-Format unterstützt, weiter umfasst:
in einem Fall, in dem das MBMS-System die Medienbeschreibungsdatei in dem Nicht-MPD-Format unterstützt, Aufzeichnen von Inhalten in der ersten Medienbeschreibungsdatei in einen erweiterten MPD-Knoten in einer Service-Ankündigungs-, SA-Datei, wobei die SA-Datei weiter einen MPD-Knoten umfasst, wobei der MPD-Knoten verwendet wird, um Inhalte einer Medienbeschreibungsdatei aufzuzeichnen, deren Format das MPD-Format ist, und der erweiterte MPD-Knoten verwendet wird, um Inhalte einer Medienbeschreibungsdatei aufzuzeichnen, deren Format das Nicht-MPD-Format ist; und
Ausstrahlen der SA-Datei und der einen oder mehreren Mediensegmentdateien.

4. Verfahren nach einem der Ansprüche 1 bis 3, wobei die Nicht-DASH Datenquelle mindestens eines umfasst von: einer Hyper Text Transfer Protocol-, HTTP-Live Streaming, HLS-Datenquelle, einer dynamischen HTTP-Streaming, HDS-Datenquelle und einer Microsoft Smooth Streaming, MSS-Datenquelle.

5. Verfahren zum Abspielen von Streaming, umfassend:
Empfangen, durch ein Endgerät, einer Datenquelle, die von einem Netzwerkelement in einem Multimedia Broadcast Multicast Service-, MBMS-System gesendet wird, wobei die Datenquelle eine dritte Medienbeschreibungsdatei und eine oder mehrere Mediensegmentdateien umfasst, und die dritte Medienbeschreibungsdatei verwendet wird, um Streaming-Datenmerkmale der einen oder mehreren Mediensegmentdateien (S302) zu beschreiben;
Beurteilen, durch das Endgerät, ob ein Format der dritten Medienbeschreibungsdatei ein Dynamic Adaptive Streaming over Hyper Text Transfer Protokoll, DASH-Media Presentation Description, MPD-Format (S304) ist;
in einem Fall, in dem das Format der dritten Medienbeschreibungsdatei das MPD-Format ist, Beurteilen, durch das Endgerät, ob die Datenquelle eine DASH-Datenquelle (S306) ist;
in einem Fall, in dem die Datenquelle nicht die DASH-Datenquelle ist, Umwandeln, durch das Endgerät, der dritten Medienbeschreibungsdatei, um eine vierte Medienbeschreibungsdatei zu erhalten, wobei ein Protokoll, das der vierten Medienbeschreibungsdatei entspricht, dasselbe wie ein Protokoll ist, das der einen oder den mehreren Mediensegmentdateien (S308) entspricht; und
Abspielen, durch das Endgerät, der vierten Medienbeschreibungsdatei und der einen oder mehrerer Mediensegmentdateien über einen Player, der das Protkoll entsprechend der vierten Medienbeschreibungsdatei (S310) unterstützt.

6. Verfahren nach Anspruch 5, wobei das Verfahren nach dem Beurteilen, durch das Endgerät, ob ein Format der dritten Medienbeschreibungsdatei ein MPD-Format (S304) ist, weiter umfasst:
in einem Fall, in dem das Format der dritten Medienbeschreibungsdatei nicht das MPD-Format ist, Abspielen der dritten Medienbeschreibungsdatei und der einen oder mehrerer Mediensegmentdateien, über einen Player, der ein Protokoll unterstützt, das der dritten Medienbeschreibungsdatei entspricht.

7. Verfahren nach Anspruch 5, wobei das Beurteilen, durch das Endgerät, ob ein Format der dritten Medienbeschreibungsdatei ein MPD-Format (S304) ist, umfasst:
Beurteilen einer Aufzeichnungsposition der dritten Medienbeschreibungsdatei in einer Service-Ankündigungs-, SA-Datei;
wenn die dritte Medienbeschreibungsdatei in einem MPD-Knoten der SA-Datei aufgezeichnet ist, Bestimmen, dass das Format der dritten Medienbeschreibungsdatei das MPD-Format ist, wobei der MPD-Knoten verwendet wird, um Inhalte einer Medienbeschreibungsdatei aufzuzeichnen, deren Format das MPD-Format ist; und
wenn die dritte Medienbeschreibungsdatei in einem erweiterten MPD-Knoten der SA-Datei aufgezeichnet ist, Bestimmen, dass das Format der dritten Medienbeschreibungsdatei ein Nicht-MPD-Format ist, wobei der erweiterte MPD-Knoten verwendet wird, um Inhalte einer Medienbeschreibungsdatei aufzuzeichnen, deren Format das Nicht-MPD-Format ist.

8. Verfahren nach Anspruch 5, wobei das Beurteilen, durch das Endgerät, ob die Datenquelle eine DASH-Datenquelle (S306) ist, umfasst:
Beurteilen, ob Formate, die der einen oder mehreren Mediensegmentdateien entsprechen, in Formaten von Mediensegmenten enthalten sind, die in einem DASH-Protokoll definiert sind;
in einem Fall, in dem die Formate, die der einen oder mehreren Mediensegmentdateien entsprechen, die in den Formaten der Mediensegmente enthalten sind, die in dem DASH-Protokoll definiert sind, Bestimmen, dass die Datenquelle eine DASH-Datenquelle ist; und
in einem Fall, in dem die Formate, die der einen oder mehreren Mediensegmentdateien entsprechen, nicht in den Formaten der Mediensegmente enthalten sind, die in dem DASH-Protokoll definiert sind, Bestimmen, dass die Datenquelle nicht die DASH-Datenquelle ist.

9. Verfahren nach einem der Ansprüche 5 bis 8, wobei eine Nicht-DASH Datenquelle mindestens eines umfasst von: einer HTTP-Live Streaming, HLS-Datenquelle, einer dynamischen HTTP-Streaming, HDS-Datenquelle und einer Microsoft Smooth Streaming, MSS-Datenquelle.

10. Vorrichtung zur Streaming-Übertragung, die auf ein Netzwerkelement in einem Multimedia Broadcast Multicast Service-, MBMS-System angewendet wird, wobei die Vorrichtung zur Streaming-Übertragung umfasst:
ein erstes Empfangsmodul (52), das konfiguriert ist, um in einem Multimedia Broadcast Multicast Service-, MBMS-System, von einem Inhalte-Anbieter, eine zu übertragenden Datenquelle zu empfangen, wobei die zu übertragende Datenquelle eine erste Medienbeschreibungsdatei und eine oder mehrere entsprechende Mediensegmentdateien umfasst, und die erste Medienbeschreibungsdatei verwendet wird, um Streaming-Datenmerkmale der einen oder mehrerer Mediensegmentdateien zu beschreiben,
ein erstes Umwandlungsmodul (54), das konfiguriert ist, um in einem Fall, in dem die zu übertragende Datenquelle eine Non Dynamic Adaptive Streaming over Hyper Text Transfer Protokoll, Nicht-DASH-Datenquelle ist, ein Format der ersten Medienbeschreibungsdatei in ein DASH Media Presentation Description, MPD-Format umzuwandeln, um eine zweite Medienbeschreibungsdatei zu erhalten; und
ein erstes Ausstrahlungsmodul (56), das konfiguriert ist, um Inhalte in der zweiten Medienbeschreibungsdatei und der einen oder mehreren Mediensegmentdateien auszustrahlen.

11. Vorrichtung nach Anspruch 10, wobei das Umwandlungsmodul (54) umfasst:
eine erste Beurteilungseinheit (72), die konfiguriert ist, um zu beurteilen, ob das Format der ersten Medienbeschreibungsdatei ein MPD-Format ist;
eine zweite Beurteilungseinheit (74), die konfiuriert ist, um in einem Fall, in dem das Format der ersten Medienbeschreibungsdatei nicht das MPD-Format ist, zu beurteilen, ob das MBMS-System eine Medienbeschreibungsdatei in einem Nicht-MPD-Format unterstützt; und
eine Umwandlungseinheit (76), die konfiguriert ist, um in einem Fall, in dem das MBMS-System die Medienbeschreibungsdatei in dem Nicht-MPD-Format nicht unterstützt, das Format der ersten Medienbeschreibungsdatei in das MPD-Format umzuwandeln, um die zweite Medienbeschreibungsdatei zu erhalten.

12. Vorrichtung nach Anspruch 11, weiter umfassend:
eine dritte Aufzeichnungseinheit (92), die konfiguriert ist, um in einem Fall, in dem das MBMS-System die Medienbeschreibungsdatei in dem Nicht-MPD-Format unterstützt, Inhalte in der ersten Medienbeschreibungsdatei in einen erweiterten MPD-Knoten in einer Service-Ankündigungs-, SA-Datei aufzuzeichnen, wobei die SA-Datei weiter einen MPD-Knoten umfasst, der MPD-Knoten verwendet wird, um Inhalte einer Medienbeschreibungsdatei aufzuzeichnen, deren Format das MPD-Format ist, und der erweiterte MPD-Knoten verwendet wird, um Inhalte einer Medienbeschreibungsdatei aufzuzeichnen, deren Format das Nicht-MPD-Format ist; und
eine dritte Ausstrahlungseinheit (94), die konfiguriert ist, um die SA-Datei und die eine oder mehrere Mediensegmentdateien auszustrahlen.

13. Vorrichtung zum Abspielen von Streaming, die auf ein Endgerät angewendet wird, wobei die Vorrichtung zum Abspielen von Streaming umfasst:
ein drittes Empfangsmodul (122), das konfiguriert ist, um eine Datenquelle, die von einem Netzwerkelement in einem Multimedia Broadcast Multicast Service-, MBMS-System gesendet wird, zu empfangen, wobei die Datenquelle eine dritte Medienbeschreibungsdatei und eine oder mehrere Mediensegmentdateien umfasst, und die dritte Medienbeschreibungsdatei verwendet wird, um Streaming-Datenmerkmale der einen oder mehreren Mediensegmentdateien zu beschreiben;
ein erstes Beurteilungsmodul (124), das konfiguriert ist, um zum beurteilen, ob ein Format der dritten Medienbeschreibungsdatei ein Dynamic Adaptive Streaming over Hyper Text Transfer Protokoll, DASH-Media Presentation Description, MPD-Format ist;
ein zweites Beurteilungsmodul (126), das konfiguriert ist, um in einem Fall, in dem das Format der dritten Medienbeschreibungsdatei das MPD-Format ist, zu beurteilen, ob die Datenquelle eine DASH-Datenquelle ist;
ein zweites Umwandlungsmodul (128), das konfiguriert ist, um in einem Fall, in dem die Datenquelle nicht die DASH-Datenquelle ist, die dritte Medienbeschreibungsdatei umzuwandeln, um eine vierte Medienbeschreibungsdatei zu erhalten, wobei ein Protokoll, das der vierten Medienbeschreibungsdatei entspricht, dasselbe wie ein Protokoll ist, das der einen oder mehreren Mediensegmentdateien entspricht; und
ein erstes Abspielmodul (1210), das konfiguriert ist, um die vierte Medienbeschreibungsdatei und die eine oder mehrere Mediensegmentdateien über einen Player abzuspielen, der das Protkoll entsprechend der vierten Medienbeschreibungsdatei unterstützt.

14. Vorrichtung nach Anspruch 13, weiter umfassend:
ein zweites Abspielmodul (132), das konfiguriert ist, um in einem Fall, in dem das Format der dritten Medienbeschreibungsdatei nicht das MPD-Format ist, die dritte Medienbeschreibungsdatei und die eine oder mehrere Mediensegmentdateien, über einen Player abzuspielen, der ein Protokoll unterstützt, das der dritten Medienbeschreibungsdatei entspricht.

15. Vorrichtung nach Anspruch 13, wobei das erste Beurteilungsmodul (124) umfasst:
eine fünfte Beurteilungseinheit (152), die konfiguriert ist, um eine Aufzeichnungsposition der dritten Medienbeschreibungsdatei in einer Service-Ankündigungs-, SA-Datei zu beurteilen;
eine erste Bestimmungseinheit (154), die konfiguriert ist, um, wenn die dritte Medienbeschreibungsdatei in einem MPD-Knoten der SA-Datei aufgezeichnet ist, zu bestimmen, dass das Format der dritten Medienbeschreibungsdatei das MPD-Format ist, wobei der MPD-Knoten verwendet wird, um Inhalte einer Medienbeschreibungsdatei aufzuzeichnen, deren Format das MPD-Format ist; und
eine zweite Bestimmungseinheit (156), die konfiguriert ist, um, wenn die dritte Medienbeschreibungsdatei in einem erweiterten MPD-Knoten der SA-Datei aufgezeichnet ist, zu bestimmen, dass das Format der dritten Medienbeschreibungsdatei ein Nicht-MPD-Format ist, wobei der erweiterte MPD-Knoten verwendet wird, um Inhalte einer Medienbeschreibungsdatei aufzuzeichnen, deren Format das Nicht-MPD-Format ist.

## Revendications

1. Procédé de transmission de diffusion en continu, comprenant :
la réception, par un élément de réseau dans un système de service de diffusion/multidiffusion multimédia, MBMS, à partir d'un fournisseur de contenu, d'une source de données devant être transmise, dans lequel la source de données devant être transmise comprend un premier fichier de description de supports et un ou plusieurs fichiers de segments multimédias correspondants, et le premier fichier de description de supports est utilisé pour décrire des caractéristiques de données de diffusion en continu des un ou plusieurs fichiers de segments multimédias (S102) ;
dans un cas où la source de données devant être transmise est une source de données non-Dynamic Adaptive Streaming over Hyper Text Transfer Protocol, non-DASH, la conversion, par l'élément de réseau dans le système MBMS, d'un format du premier fichier de description de supports en un format DASH Media Presentation Description, MPD, pour obtenir un deuxième fichier de description de supports (S104) ; et
la diffusion, par l'élément de réseau dans le système MBMS, de contenus dans le deuxième fichier de description de supports et les un ou plusieurs fichiers de segments multimédias (S106).

2. Procédé selon la revendication 1, dans lequel la conversion, par l'élément de réseau dans le système MBMS, d'un format du premier fichier de description de supports dans un format MPD pour obtenir un deuxième fichier de description de supports (S104) comprend :
le fait d'estimer si le format du premier fichier de description de supports est un format MPD ;
dans un cas où le format du premier fichier de description de supports n'est pas le format MPD, le fait d'estimer si le système MBMS prend en charge un fichier de description de supports dans un format non-MPD ; et
dans un cas où le système MBMS ne prend pas en charge le fichier de description de supports dans le format non-MPD, la conversion du format du premier fichier de description de supports dans le format MPD pour obtenir le deuxième fichier de description de supports.

3. Procédé selon la revendication 2, dans lequel après le fait d'estimer si le système MBMS prend en charge un fichier de description de supports dans un format non-MPD, le procédé comprend en outre :
dans un cas où le système MBMS prend en charge le fichier de description de supports dans le format non-MPD, l'enregistrement de contenus dans le premier fichier de description de supports dans un nœud MPD étendu dans un fichier d'annonce de service, SA, dans lequel le fichier SA comprend en outre un nœud MPD, le nœud MPD est utilisé pour enregistrer des contenus d'un fichier de description de supports dont le format est le format MPD, et le nœud MPD étendu est utilisé pour enregistrer des contenus d'un fichier de description de supports dont le format est le format non-MPD ; et
la diffusion du fichier SA et des un ou plusieurs fichiers de segments multimédias.

4. Procédé selon l'une quelconque des revendications 1 à 3, dans lequel la source de données non-DASH comprend au moins une parmi : une source de données Hyper Text Transfer Protocol, HTTP, Live Streaming, HLS, une source de données HTTP Dynamic Streaming, HDS, et une source de données Microsoft Smooth Streaming, MSS.

5. Procédé de lecture de diffusion en continu, comprenant :
la réception, par un terminal, d'une source de données envoyée à partir d'un élément de réseau dans un système de service de diffusion/multidiffusion multimédia, MBMS, dans lequel la source de données comprend un troisième fichier de description de supports et un ou plusieurs fichiers de segments multimédias, et le troisième fichier de description de supports est utilisé pour décrire des caractéristiques de données de diffusion en continu des un ou plusieurs fichiers de segments multimédias (S302) ;
le fait d'estimer, par le terminal, si un format du troisième fichier de description de supports est un format Dynamic Adaptive Streaming over Hyper Text Transfer Protocol, DASH, Media Presentation Description, MPD (S304) ;
dans un cas où le format du troisième fichier de description de supports est le format MPD, le fait d'estimer, par le terminal, si la source de données est une source de données DASH (S306) ;
dans un cas où la source de données n'est pas la source de données DASH, la conversion, par le terminal, du troisième fichier de description de supports pour obtenir un quatrième fichier de description de supports, dans lequel un protocole correspondant au quatrième fichier de description de supports est le même qu'un protocole correspondant aux un ou plusieurs fichiers de segments multimédias (S308) ; et
la lecture, par le terminal, du quatrième fichier de description de supports et des un ou plusieurs fichiers de segments multimédias via un lecteur prenant en charge le protocole correspondant au quatrième fichier de description de supports (S310).

6. Procédé selon la revendication 5, dans lequel après le fait d'estimer, par le terminal, si un format du troisième fichier de description de supports est un format MPD (S304), le procédé comprend en outre :
dans un cas où le format du troisième fichier de description de supports n'est pas le format MPD, la lecture du troisième fichier de description de supports et des un ou plusieurs fichiers de segments multimédias via un lecteur prenant en charge un protocole correspondant au troisième fichier de description de supports.

7. Procédé selon la revendication 5, dans lequel le fait d'estimer, par le terminal, si un format du troisième fichier de description de supports est un format MPD (S304) comprend :
le fait d'estimer une position d'enregistrement du troisième fichier de description de supports dans un fichier d'annonce de service, SA ;
lorsque le troisième fichier de description de supports est enregistré dans un nœud MPD du fichier SA, le fait de déterminer que le format du troisième fichier de description de supports est le format MPD, dans lequel le nœud MPD est utilisé pour enregistrer des contenus d'un fichier de description de supports dont le format est le format MPD ; et
lorsque le troisième fichier de description de supports est enregistré dans un nœud MPD étendu du fichier SA, le fait de déterminer que le format du troisième fichier de description de supports est un format non-MPD, dans lequel le nœud MPD étendu est utilisé pour enregistrer des contenus d'un fichier de description de supports dont le format est le format non-MPD.

8. Procédé selon la revendication 5, dans lequel le fait d'estimer, par le terminal, si la source de données est une source de données DASH (S306) comprend :
le fait d'estimer si des formats correspondant aux un ou plusieurs fichiers de segments multimédias sont contenus dans des formats de segments multimédias définis dans un protocole DASH ;
dans un cas où les formats correspondant aux un ou plusieurs fichiers de segments multimédias sont contenus dans les formats des segments multimédias définis dans le protocole DASH, le fait de déterminer que la source de données est une source de données DASH ; et
dans un cas où les formats correspondant aux un ou plusieurs fichiers de segments multimédias ne sont pas contenus dans les formats des segments multimédias définis dans le protocole DASH, le fait de déterminer que la source de données n'est pas la source de données DASH.

9. Procédé selon l'une quelconque des revendications 5 à 8, dans lequel une source de données non DASH comprend au moins une parmi : une source de données HTTP Live Streaming, HLS, une source de données HTTP Dynamic Streaming, HDS, et une source de données Microsoft Smooth Streaming, MSS.

10. Dispositif de transmission de diffusion en continu, appliqué à un élément de réseau dans un système de service de diffusion/multidiffusion multimédia, MBMS, le dispositif de transmission de diffusion en continu comprenant :
un premier module de réception (52), configuré pour recevoir, dans un système de service de diffusion/multidiffusion multimédia, MBMS, à partir d'un fournisseur de contenu, une source de données devant être transmise, dans lequel la source de données devant être transmise comprend un premier fichier de description de supports et un ou plusieurs fichiers de segments multimédias correspondants, et le premier fichier de description de supports est utilisé pour décrire des caractéristiques de données de diffusion en continu des un ou plusieurs fichiers de segments multimédias ;
un premier module de conversion (54), configuré pour convertir, dans un cas où la source de données devant être transmise est une source de données non-Dynamic Adaptive Streaming over Hyper Text Transfer Protocol, non-DASH, un format du premier fichier de description de supports en un format DASH Media Presentation Description, MPD, pour obtenir un deuxième fichier de description de supports ; et
un premier module de diffusion (56), configuré pour diffuser des contenus dans le deuxième fichier de description de supports et les un ou plusieurs fichiers de segments multimédias.

11. Dispositif selon la revendication 10, dans lequel le premier module de conversion (54) comprend :
une première unité d'estimation (72), configurée pour estimer si le format du premier fichier de description de supports est un format MPD ;
une seconde unité d'estimation (74), configurée pour estimer, dans un cas où le format du premier fichier de description de supports n'est pas le format MPD, si le système MBMS prend en charge un fichier de description de supports dans un format non-MPD ; et
une unité de conversion (76), configurée pour convertir, dans un cas où le système MBMS ne prend pas en charge le fichier de description de supports dans le format non-MPD, le format du premier fichier de description de supports dans le format MPD pour obtenir le deuxième fichier de description de supports.

12. Dispositif selon la revendication 11, comprenant en outre :
une troisième unité d'enregistrement (92), configurée pour enregistrer, dans un cas où le système MBMS prend en charge le fichier de description de supports dans le format non-MPD, des contenus dans le premier fichier de description de supports dans un nœud MPD étendu dans un fichier d'annonce de service, SA,
dans lequel le fichier SA comprend en outre un nœud MPD, le nœud MPD est utilisé pour enregistrer des contenus d'un fichier de description de supports dont le format est le format MPD, et le nœud MPD étendu est utilisé pour enregistrer des contenus d'un fichier de description de supports dont le format est le format non-MPD ; et
une troisième unité de diffusion (94), configurée pour diffuser le fichier SA et les un ou plusieurs fichiers de segments multimédias.

13. Dispositif de lecture de diffusion en continu, appliqué à un terminal, le dispositif de lecture de diffusion en continu comprenant :
un troisième module de réception (122), configuré pour recevoir une source de données envoyée à partir d'un élément de réseau dans un système de service de diffusion/multidiffusion multimédia, MBMS, dans lequel la source de données comprend un troisième fichier de description de supports et un ou plusieurs fichiers de segments multimédias, et le troisième fichier de description de supports est utilisé pour décrire des caractéristiques de données de diffusion en continu des un ou plusieurs fichiers de segments multimédias ;
un premier module d'estimation (124), configuré pour estimer si un format du troisième fichier de description de supports est un format Dynamic Adaptive Streaming over Hyper Text Transfer Protocol, DASH, Media Presentation Description, MPD ;
un second module d'estimation (126), configuré pour estimer, dans un cas où le format du troisième fichier de description de supports est le format MPD, si la source de données est une source de données DASH ;
un second module de conversion (128), configuré pour convertir, dans un cas où la source de données n'est pas la source de données DASH, le troisième fichier de description de supports pour obtenir un quatrième fichier de description de supports, dans lequel un protocole correspondant au quatrième fichier de description de supports est le même qu'un protocole correspondant aux un ou plusieurs fichiers de segments multimédias ; et
un premier module de lecture (1210), configuré pour lire le quatrième fichier de description de supports et les un ou plusieurs fichiers de segments multimédias via un lecteur prenant en charge le protocole correspondant au quatrième fichier de description de supports.

14. Dispositif selon la revendication 13, comprenant en outre :
un second module de lecture (132), configuré pour lire, dans un cas où le format du troisième fichier de description de supports n'est pas le format MPD, le troisième fichier de description de supports et les un ou plusieurs fichiers de segments multimédias via un lecteur prenant en charge un protocole correspondant au troisième fichier de description de supports.

15. Dispositif selon la revendication 13, dans lequel le premier module d'estimation (124) comprend :
une cinquième unité d'estimation (152), configurée pour estimer une position d'enregistrement du troisième fichier de description de supports dans un fichier d'annonce de service, SA ;
une première unité de détermination (154), configurée pour déterminer, lorsque le troisième fichier de description de supports est enregistré dans un nœud MPD du fichier SA, que le format du troisième fichier de description de supports est le format MPD, dans lequel le nœud MPD est utilisé pour enregistrer des contenus d'un fichier de description de supports dont le format est le format MPD ; et
une seconde unité de détermination (156), configurée pour déterminer, lorsque le troisième fichier de description de supports est enregistré dans un nœud MPD étendu du fichier SA, que le format du troisième fichier de description de supports est un format non-MPD, dans lequel le nœud MPD étendu est utilisé pour enregistrer des contenus d'un fichier de description de supports dont le format est le format non-MPD.
